(19) Europäisches Patentamt
European Patent Office
Office européen des brevets

(11) EP 4 560 769 A1

(12) EUROPEAN PATENT APPLICATION
published in accordance with Art. 153(4) EPC

(43) Date of publication:
28.05.2025 Bulletin 2025/22

(21) Application number: 24852945.5

(22) Date of filing: 29.08.2024

(51) International Patent Classification (IPC):
H01M 10/0569 (2010.01)    C08G 65/48 (2006.01)
H01M 10/0568 (2010.01)

(52) Cooperative Patent Classification (CPC):
C08G 65/48; C08L 71/00; H01M 10/0568;
H01M 10/0569

(86) International application number:
PCT/JP2024/031040

(87) International publication number:
WO 2025/047899 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.08.2023 JP 2023141291

(71) Applicant: DAIKIN INDUSTRIES, LTD.
Osaka-Shi, Osaka 530-0001 (JP)

(72) Inventors:
• HIRAGA, Kentaro
  Osaka-Shi, Osaka 530-0001 (JP)
• INOUE, Mayu
  Osaka-Shi, Osaka 530-0001 (JP)
• YAMADA, Takaya
  Osaka-Shi, Osaka 530-0001 (JP)

(74) Representative: Hoffmann Eitle
Patent- und Rechtsanwälte PartmbB
Arabellastraße 30
81925 München (DE)

(54) **COMPOSITION, ELECTROLYTE SOLUTION, POLYMER ELECTROLYTE, ELECTROCHEMICAL DEVICE, AND FLUOROPOLYETHER**

(57) The disclosure aims to provide a composition capable of improving the high-temperature durability of electrochemical devices, an electrolyte solution, a polymer electrolyte, an electrochemical device, and a fluoropolyether. The disclosure relates to a composition containing: a salt; and at least one fluoropolyether represented by any of the following formulas (1) to (3).

(1)    $R^1\text{-O-}Ra^1\text{-}Rb^1\text{-O-}Ra^1\text{-}R^1$

(2)    $R^2\text{-}Rb^2\text{-O-}Ra^2\text{-}Rb^2\text{-}R^2$

(3)    $R^3\text{-}Rb^3\text{-O-}Ra^3\text{-}R^3$

**Description**

TECHNICAL FIELD

The disclosure relates to compositions, electrolyte solutions, polymer electrolytes, electrochemical devices, and fluoropolyethers.

BACKGROUND ART

Current electric appliances demonstrate a tendency to have a reduced weight and a smaller size, which leads to development of electrochemical devices such as lithium-ion secondary batteries having a high energy density.
Patent Literature 1 discloses, as a technique related to electrochemical devices, a liquid composition containing a specific (per)fluoropolyether.

CITATION LIST

- Patent Literature

Patent Literature 1: JP 2019-523529 T

SUMMARY OF INVENTION

- Technical Problem

The disclosure aims to provide a composition capable of improving the high-temperature durability of electrochemical devices, an electrolyte solution, a polymer electrolyte, an electrochemical device, and a fluoropolyether.

- Solution to Problem

The disclosure (1) relates to a composition containing:

a salt; and
at least one fluoropolyether represented by any of the following formulas (1) to (3):

$$(1) \qquad R^1\text{-O-}Ra^1\text{-}Rb^1\text{-O-}Ra^1\text{-}R^1;$$

$$(2) \qquad R^2\text{-}Rb^2\text{-O-}Ra^2\text{-}Rb^2\text{-}R^2;$$

and

$$(3) \qquad R^3\text{-}Rb^3\text{-O-}Ra^3\text{-}R^3,$$

wherein $Ra^1$ to $Ra^3$ are each independently a polyoxyalkylene group containing 4 to 50 fluorine-free oxyalkylene units;
the oxyalkylene units in $Ra^1$ to $Ra^3$ are each independently $-CH_2CH_2O-$ or $-CH_2CH(J)O-$;
each J is independently an alkyl group or an aryl group;
$Rb^1$ to $Rb^3$ are each independently a fluoropolyether group represented by the following formula (4);
$R^1$ and $R^3$ are each independently a fluorine atom, a C1-C3 alkyl group, an aryl group, a carboxylic acid group, or a C1-C3 fluoroalkyl group; and
each $R^2$ is independently a hydrogen atom, a hydroxy group, a fluorine atom, a C1-C3 alkyl group, an aryl group, a carboxylic acid group, or a C1-C3 fluoroalkyl group:

$$(4) \qquad -Rf^1\text{-}Rf\text{-O-}Rf^2\text{-}$$

wherein $Rf^1$ and $Rf^2$ are each independently a C1-C16 alkylene group optionally substituted with a fluorine atom, and Rf is a divalent fluoropolyether group.

The disclosure (2) relates to the composition according to the disclosure (1),
wherein the $Ra^1$ to $Ra^3$ are each independently a polyoxyalkylene group represented by the following formula (Ra-I):

(Ra-I):     $-(CH_2CH_2O)_r(CH_2CH(CH_3)O)_s(CH_2CH(CH_2CH_3)O)_t(CH_2CH(Ph)O)_u-$

wherein r, s, t, and u are each independently an integer of 0 or 1 or greater, and r + s + t + u is 4 to 50.

The disclosure (3) relates to the composition according to the disclosure (1) or (2), wherein the $Ra^1$ to $Ra^3$ each have a number average molecular weight of 40 to 4000.

The disclosure (4) relates to the composition according to any one of the disclosures (1) to (3), wherein each Rf is independently a fluoropolyether group represented by the following formula (Rf-I):

Formula (Rf-I):     $-(OC_6F_{12})_a-(OC_5F_{10})_b-(OC_4F_8)_c-(OC_3Rc_6)_d-(OC_2F_4)_e-(OCF_2)_f-$

wherein Rcs are each independently a hydrogen atom, a fluorine atom, or a chlorine atom;

a, b, c, d, e, and f are each independently an integer of 0 to 200;
a sum of a, b, c, d, e, and f is 1 or greater;
repeating units with a, b, c, d, e, and f are present in an arbitrary order; and
at least one of a, b, c, e, and f is 1 or greater when all Rcs are hydrogen atoms or chlorine atoms.

The disclosure (5) relates to the composition according to any one of the disclosures (1) to (4), wherein each Rf is independently a group represented by the following formula (Rf-I-I) or the following formula (Rf-I-II):

Formula (Rf-I-I):     $-(OC_3F_6)_d-(OC_2F_4)_e-$

wherein d is an integer of 1 to 200 and e is 0 or 1,

Formula (Rf-I-II):     $-(OC_4F_8)_c-(OC_3F_6)_d-(OC_2F_4)_e-(OCF_2)_f-$

wherein c and d are each independently an integer of 0 to 30;

e and f are each independently an integer of 1 to 200;
a sum of c, d, e, and f is 2 or greater; and
repeating units with c, d, e, and f are present in an arbitrary order.

The disclosure (6) relates to the composition according to any one of the disclosures (1) to (5), wherein the $R^1$ to $R^3$ are each independently a methyl group, an ethyl group, a trifluoromethyl group, or a pentafluoroethyl group.

The disclosure (7) relates to the composition according to any one of the disclosures (1) to (6), wherein the salt includes a lithium salt.

The disclosure (8) relates to the composition according to any one of the disclosures (1) to (7), wherein an amount of the salt is 0.1 to 30% by mass.

The disclosure (9) relates to the composition according to any one of the disclosures (1) to (8), wherein the composition is liquid at a temperature within a range of 25°C to 80°C.

The disclosure (10) relates to the composition according to any one of the disclosures (1) to (9), wherein an amount of a polyalkylene oxide represented by the following formula (5) is less than 20% by mass:

(5)     $R^{1B}-(OCHR^{1A}(CH_2)_jCHR^{2A})_n-OR^{2B}$

wherein $R^{1A}$ and $R^{2A}$ are each independently a hydrogen atom or a C1-C5 alkyl group;

j is an integer of 0 or 1 or 2,
$R^{1B}$ and $R^{2B}$ are each independently a hydrogen atom or a C1-C3 alkyl group; and
n is an integer of 5 to 1000.

The disclosure (11) relates to an electrolyte solution containing the composition according to any one of the disclosures (1) to (10).

The disclosure (12) relates to the electrolyte solution according to the disclosure (11), wherein the electrolyte solution has an ion conductivity of $1.0 \times 10^{-7}$ to $1.0 \times 10^{-3}$ S/cm.

The disclosure (13) relates to the electrolyte solution according to the disclosure (11) or (12), wherein the electrolyte solution has a Li ion transport number of 0.2 to 0.5.

The disclosure (14) relates to a polymer electrolyte containing the electrolyte solution according to any one of the disclosures (11) to (13).

The disclosure (15) relates to an electrochemical device containing the electrolyte solution according to any one of the disclosures (11) to (13) or the polymer electrolyte according to the disclosure (14).

The disclosure (16) relates to A fluoropolyether represented by the following formula (2A):

$$(2A) \qquad R^2\text{-}Rb^2\text{-}O\text{-}Ra^2\text{-}Rb^2\text{-}R^2$$

wherein $Ra^2$ is a polyoxyalkylene group containing 4 to 50 fluorine-free oxyalkylene units;

the oxyalkylene units in $Ra^2$ are each independently $-CH_2CH_2O-$ or $-CH_2CH(J)O-$;
each J is independently an alkyl group or an aryl group;
each $Rb^2$ is independently a fluoropolyether group represented by the following formula (4A); and
each $R^2$ is independently a hydrogen atom, a hydroxy group, a fluorine atom, a C1-C3 alkyl group, an aryl group, a carboxylic acid group, or a C1-C3 fluoroalkyl group:

$$(4A) \qquad -Rf^1\text{-}Rf\text{-}O\text{-}Rf^2$$

-wherein $Rf^1$ and $Rf^2$ are each independently a C1-C16 alkylene group optionally substituted with a fluorine atom, and $Rf$ is a divalent fluoropolyether group.

The disclosure (17) relates to the fluoropolyether according to the disclosure (16),

wherein the $Ra^2$ is a polyoxyalkylene group represented by the following formula (Ra-I),
each $Rf$ is independently a group represented by the following formula (Rf-I-I) or the following formula (Rf-I-II):

$$(Ra\text{-}I): \qquad -(CH_2CH_2O)_r\text{-}(CH_2CH(CH_3)O)_s\text{-}(CH_2CH(CH_2CH_3)O)_t\text{-}(CH_2CH(Ph)O)_u\text{-}$$

wherein r, s, t, and u are each independently an integer of 0 or 1 or greater, and $r + s + t + u$ is 4 to 50;

$$\text{Formula (Rf-I-I):} \qquad -(OC_3F_6)_d\text{-}(OC_2F_4)_e\text{-}$$

wherein d is an integer of 1 to 200 and e is 0 or 1;

$$\text{Formula (Rf-I-II):} \qquad -(OC_4F_8)_c\text{-}(OC_3F_6)_d\text{-}(OC_2F_4)_e\text{-}(OCF_2)_f\text{-}$$

wherein c and d are each independently an integer of 0 to 30,
e and f are each independently an integer of 1 to 200,
a sum of c, d, e, and f is 2 or greater, and
repeating units with c, d, e, and f are present in an arbitrary order.

- Advantageous Effects of Invention

The disclosure can provide a composition capable of improving the high-temperature durability of electrochemical devices, an electrolyte solution, a polymer electrolyte, an electrochemical device, and a fluoropolyether.

DESCRIPTION OF EMBODIMENTS

The disclosure will be specifically described hereinbelow.

<Composition>

The disclosure relates to a composition containing:

a salt; and
at least one fluoropolyether represented by any of the following formulas (1) to (3):

$$(1) \qquad R^1\text{-}O\text{-}Ra^1\text{-}Rb^1\text{-}O\text{-}Ra^1\text{-}R^1;$$

(2)    $R^2$-$Rb^2$-O-$Ra^2$-$Rb^2$-$R^2$;

and

(3)    $R^3$-$Rb^3$-O-$Ra^3$-$R^3$,

wherein $Ra^1$ to $Ra^3$ are each independently a polyoxyalkylene group containing 4 to 50 fluorine-free oxyalkylene units; the oxyalkylene units in $Ra^1$ to $Ra^3$ are each independently -$CH_2CH_2O$- or -$CH_2CH(J)O$-; each J is independently an alkyl group or an aryl group; $Rb^1$ to $Rb^3$ are each independently a fluoropolyether group represented by the following formula (4); $R^1$ and $R^3$ are each independently a fluorine atom, a C1-C3 alkyl group, an aryl group, a carboxylic acid group, or a C1-C3 fluoroalkyl group; and each $R^2$ is independently a hydrogen atom, a hydroxy group, a fluorine atom, a C1-C3 alkyl group, an aryl group, a carboxylic acid group, or a C1-C3 fluoroalkyl group:

(4)    -$Rf^1$-Rf-O-$Rf^2$-

-wherein $Rf^1$ and $Rf^2$ are each independently a C1-C16 alkylene group optionally substituted with a fluorine atom, and Rf is a divalent fluoropolyether group.

Containing the components above, the composition of the disclosure can improve the high-temperature durability (especially the cycle characteristic at high temperatures) of electrochemical devices.

In addition, while common electrolyte solutions tend to be highly flammable, the composition of the disclosure is flame retardant and more electrochemically stable than common electrolyte solutions, and thus can improve the handleability of electrochemical devices. The composition also has favorable ion conductivity and a favorable transport number.

Since fluoropolyethers have insufficient ion conductive properties due to their generally low salt solubility, it has been difficult to use a fluoropolyether as a solvent in an electrolyte solution. On the other hand, fluoropolyethers represented by any of the formulas (1) to (3) above dissolve salts and have sufficient ion conductive properties, and thus can be used as solvents in electrolyte solutions.

When the oxyalkylene units in $Ra^1$ to $Ra^3$ are each - $CH_2CH(J)O$-, J as an alkyl group may be linear or branched, and is preferably linear. The alkyl group for J preferably has a carbon number of 1 to 3.

Examples of aryl groups for J include a phenyl group, a 4-nitrophenyl group, a 4-acetylaminophenyl group, and a 4-methanesulfonylphenyl group.

Preferably, $Ra^1$ to $Ra^3$ are each independently a polyoxyalkylene group represented by the following formula (Ra-I):

(Ra-I):    -$(CH_2CH_2O)_r$-$(CH_2CH(CH_3)O)_s$-$(CH_2CH(CH_2CH_3)O)_t$- $(CH_2CH(Ph)O)_u$-

wherein r, s, t, and u are each independently an integer of 0 or 1 or greater, and r + s + t + u is 4 to 50.

In the formula (Ra-I), r is preferably 1 or greater, more preferably 2 or greater, while preferably 30 or smaller, more preferably 20 or smaller.

s, t, and u are each preferably 10 or smaller, more preferably 5 or smaller, still more preferably 0.
r + s + t + u is preferably 1 or greater, more preferably 2 or greater, while preferably 20 or smaller, more preferably 10 or smaller.

$Ra^1$ to $Ra^3$ each have a number average molecular weight of preferably 40 or greater, more preferably 100 or greater, while preferably 4000 or smaller, more preferably 1000 or smaller.

The number average molecular weights of $Ra^1$ to $Ra^3$ herein are measured by $^1$H-NMR.

In $Rb^1$ to $Rb^3$, the alkylene groups for $Rf^1$ and $Rf^2$ in the formula (4) may be linear or branched, and are preferably linear.

The alkylene groups for $Rf^1$ and $Rf^2$ are each preferably a fluorine-substituted alkylene group substituted with a fluorine atom.

The alkylene groups for $Rf^1$ and $Rf^2$ each preferably have a carbon number of 1 to 3.

In $Rb^1$ to $Rb^3$, Rf in the formula (4) may have a cyclic structure.

In $Rb^1$ to $Rb^3$, Rf in the formula (4) is preferably a fluoropolyether group represented by the following formula (Rf-I):

Formula (Rf-I):    $-(OC_6F_{12})_a-(OC_5F_{10})_b-(OC_4F_8)_c-(OC_3Rc_6)_d-(OC_2F_4)_e-(OCF_2)_f-$

wherein Rcs are each independently a hydrogen atom, a fluorine atom, or a chlorine atom;

a, b, c, d, e, and f are each independently an integer of 0 to 200;
a sum of a, b, c, d, e, and f is 1 or greater;
repeating units with a, b, c, d, e, and f are present in an arbitrary order; and
at least one of a, b, c, e, and f is 1 or greater when all Rcs are hydrogen atoms or chlorine atoms.

Rc is preferably a hydrogen atom or a fluorine atom, more preferably a fluorine atom. In other words, Rf in the formula (4) is preferably a perfluoropolyether group.
a, b, c, d, e, and f are preferably each independently an integer of 0 to 100.
The sum of a, b, c, d, e, and f is preferably 5 or greater, more preferably 10 or greater, and may be 15 or greater or 20 or greater. The sum of a, b, c, d, e, and f is preferably 100 or smaller, more preferably 60 or smaller, and may be 50 or smaller or 30 or smaller.
The repeating units with a, b, c, d, e, and f each may be linear or branched.

- $(OC_6F_{12})$- may be, for example, any of - $(OCF_2CF_2CF_2CF_2CF_2CF_2)$-, -$(OCF(CF_3)CF_2CF_2CF_2CF_2)$-, -$(OCF_2CF(CF_3)CF_2CF_2CF_2)$-, -$(OCF_2CF_2CF(CF_3)CF_2CF_2)$-, - $(OCF_2CF_2CF_2CF(CF_3)CF_2)$-, and -$(OCF_2CF_2CF_2CF_2CF(CF_3))$-.
- $(OC_5F_{10})$- may be, for example, any of - $(OCF_2CF_2CF_2CF_2)$-, -$(OCF(CF_3)CF_2CF_2)$-, - $(OCF_2CF(CF_3)CF_2CF_2)$-, -$(OCF_2CF_2CF(CF_3)CF_2)$-, and - $(OCF_2CF_2CF_2CF(CF_3))$.
- $(OC_4F_8)$- may be, for example, any of - $(OCF_2CF_2CF_2CF_2)$-, -$(OCF(CF_3)CF_2CF_2)$-, -$(OCF_2CF(CF_3)CF_2)$-, - $(OCF_2CF_2CF(CF_3))$-, -$(OC(CF_3)_2CF_2)$-, -$(OCF_2C(CF_3)_2)$-, - $(OCF(CF_3)CF(CF_3))$-, -$(OCF(C_2F_5)CF_2)$-, and -$(OCF_2CF(C_2F_5))$.
- $(OC_3F_6)$- (specifically, the case where all Rcs in the formula (Rf-I) are fluorine atoms) may be, for example, any of -$(OCF_2CF_2CF_2)$-, -$(OCF(CF_3)CF_2)$-, and -$(OCF_2CF(CF_3))$-.
- $(OC_2F_4)$- may be, for example, either -$(OCF_2CF_2)$- or - $(OCF(CF_3))$-.

Rf may be a group represented by any of the following formulas (Rf-I-I) to (Rf-I-V):

Formula (Rf-I-I):    $-(OC_3F_6)_d-(OC_2F_4)_e-$

wherein d is an integer of 1 to 200 and e is 0 or 1;

Formula (Rf-I-II):    $-(OC_4F_8)_c-(OC_3F_6)_d-(OC_2F_4)_e-(OCF_2)_f-$

wherein c and d are each independently an integer of 0 to 30,

e and f are each independently an integer of 1 to 200,
a sum of c, d, e, and f is 2 or greater, and
repeating units with c, d, e, and f are present in an arbitrary order;

Formula (Rf-I-III):    $- (R^{20}-R^{21})_g-$

wherein $R^{20}$ is $OCF_2$ or $OC_2F_4$,
$R^{21}$ is a group selected from $OC_2F_4$, $OC_3F_6$, $OC_4F_8$, $OC_5F_{10}$, and $OC_6F_{12}$ or a combination of two or three groups selected from the aforementioned groups, and
g is an integer of 2 to 100;

Formula (Rf-I-IV):    $-(OC_6F_{12})_a-(OC_5F_{10})_b-(OC_4F_8)_c-(OC_3F_6)_d-(OC_2F_4)_e-(OCF_2)_f-$

wherein e is an integer of 1 to 200,
a, b, c, d, and f are each independently an integer of 0 to 200, and
repeating units with a, b, c, d, e, and f are present in an arbitrary order;

Formula (Rf-I-V): $-(OC_6F_{12})_a-(OC_5F_{10})_b-(OC_4F_8)_c-(OC_3F_6)_d-(OC_2F_4)_e-(OCF_2)_f-$

wherein f is an integer of 1 to 200,

a, b, c, d, and e are each independently an integer of 0 to 200, and

repeating units with a, b, c, d, e, and f are present in an arbitrary order.

In the formula (Rf-I-I), d is preferably 5 to 200, more preferably 10 to 100, still more preferably 15 to 50, and may be 25 to 35.

The group represented by the formula (Rf-I-I) is preferably a group represented by $-(OCF_2CF_2CF_2)_d-$ or $-(OCF(CF_3)CF_2)_d-$.

In the formula (Rf-I-II), e and f are each independently an integer of preferably 5 to 200, more preferably 10 to 200. The sum of c, d, e, and f is preferably 5 or greater, more preferably 10 or greater, and may be 15 or greater or 20 or greater.

The group represented by the formula (Rf-I-II) is preferably a group represented by $-(OCF_2CF_2CF_2)_c-(OCF_2CF_2CF_2)_d-(OCF_2CF_2)_e-(OCF_2)_f-$ or a group represented by $-(OC_2F_4)_e-(OCF_2)_f-$, more preferably a group represented by $-(OC_2F_4)_e-(OCF_2)_f-$.

In the formula (Rf-I-III), $R^{20}$ is preferably $OC_2F_4$, $R^{21}$ is preferably a group selected from $OC_2F_4$, $OC_3F_6$ and $OC_4F_8$ or a combination of two or three groups independently selected from the aforementioned groups, more preferably a group selected from $OC_3F_6$ and $OC_4F_8$. Non-limiting examples of the combination of two or three groups independently selected from $OC_2F_4$, $OC_3F_6$, and $OC_4F_8$ include $-OC_2F_4OC_3F_6-$, $-OC_2F_4OC_4F_8-$, $-OC_3F_6OC_2F_4-$, $-OC_3F_6OC_3F_6-$, $-OC_3F_6OC_4F_8-$, $-OC4F8OC_4F_8-$, $-OC_4F_8OC_3F_6-$, $-OC_4F_8OC_2F_4-$, $-OC_2F_4OC2F4OC_3F_6-$, $-OC_2F_4OC_2F_4OC_4F_8-$, $-OC_2F_4OC_3F_6OC_2F_4-$, $-OC_2F_4OC_3F_6OC_3F_6-$, $-OC_2F_4OC_4F_8OC_2F_4-$, $-OC_3F_6OC_2F_4OC_2F_4-$, $-OC_3F_6OC_2F_4OC_3F_6-$, $-OC_3F_6OC3F6OC_2F_4-$, and $-OC_4F_8OC_2F_4OC_2F_4-$.

In the formula (Rf-I-III), g is an integer of preferably 3 or greater, more preferably 5 or greater. g is preferably an integer of 50 or smaller.

In the formula (Rf-I-III), $OC_2F_4$, $OC_3F_6$, $OC_4F_8$, $OC_5F_{10}$, and $OC_6F_{12}$ may be either linear or branched, and are preferably linear. In this embodiment, the formula (Rf-I-III) preferably represents $-(OC_2F_4-OC_3F_6)_g-$ or $-(OC_2F_4-OC_4F_8)_g-$.

In the formula (Rf-I-IV), e is an integer of preferably 1 to 100, more preferably 5 to 100. The sum of a, b, c, d, e, and f is preferably 5 or greater, more preferably 10 or greater, and is, for example, 10 to 100.

In the formula (Rf-I-V), f is an integer of preferably 1 to 100, more preferably 5 to 100. The sum of a, b, c, d, e, and f is preferably 5 or greater, more preferably 10 or greater, and is, for example, 10 to 100.

The ratio of e to f (hereafter, referred to as "e/f ratio") in Rf may be 0.5 to 4, and is preferably 0.6 to 3, more preferably 0.7 to 2, still more preferably 0.8 to 1.4. Setting the e/f ratio to 4 or smaller further improves the lubricity and chemical stability. The smaller the e/f ratio, the higher the lubricity. Setting the e/f ratio to 0.5 or greater can further enhance the stability of the compound. The greater the e/f ratio, the better the stability of the fluoropolyether structure. In this case, the value of the e/f ratio is preferably 0.8 or greater.

Rf may be a group represented by the following

formula (Rf-I-VI): $-(OCF_2CF_2CF_2)_a-(OCF(CF_3)CF_2)_b-(OCF_2CF(CF_3))_c-(OCF_2CF_2)_d-(OCF(CF_3))_e-(OCF_2)_f-$

wherein a, b, c, d, e, and f are each independently an integer of 0 to 200,

the sum of a, b, c, d, e, and f is 1 or greater, and

repeating units with a, b, c, d, e, and f are present in an arbitrary order.

Rf may be a group represented by the following

formula (Rf-I-VII): $-(OCF_2CF_2)_d-(OCF(CF_3))_e-(OCF_2)_f-$

wherein d, e, and f are each independently an integer of 0 to 200,

the sum of d, e, and f is 1 or greater, and

repeating units with d, e, and f are present in an arbitrary order.

In the case where Rf is this group, the salt solubility is expected to be better because an increase in the number of ether bonds facilitates coordination of salt cations.

The ratio of d to f (hereafter, referred to as "d/f ratio") in Rf may be 0.5 to 4, and is preferably 0.6 to 3, more preferably 0.7 to 2, still more preferably 0.8 to 1.4. Setting the d/f ratio to 4 or smaller further improves the lubricity and chemical stability. The smaller the d/f ratio, the higher the lubricity. Setting the d/f ratio to 0.5 or greater can further enhance the stability of the compound. The greater the d/f ratio, the better the stability of the fluoropolyether structure. In this case, the value of the d/f ratio is preferably 0.8 or greater.

Each Rf is independently preferably a group represented by the formula (Rf-I-I) or the formula (Rf-I-II), more preferably a group represented by the formula (Rf-I-II).

Rf may have a number average molecular weight of, but not limited to, for example, 500 to 30000, preferably 1500 to 30000, more preferably 2000 to 10000.

The number average molecular weight of Rf herein is measured by $^{19}$F-NMR.

The alkyl or fluoroalkyl group for $R^1$ to $R^3$ may be linear or branched, and is preferably linear.

Examples of aryl groups for $R^1$ to $R^3$ include a phenyl group, a 4-nitrophenyl group, a 4-acetylaminophenyl group, and a 4-methanesulfonylphenyl group.

$R^1$ to $R^3$ are each independently preferably a C1-C3 alkyl group or a C1-C3 fluoroalkyl group, more preferably a methyl group, an ethyl group, a trifluoromethyl group, or a pentafluoroethyl group, still more preferably a methyl group, a trilfluoromethyl group, or a pentafluoroethyl group.

In order to achieve sufficient ion conductive properties and favorable improvement of the high-temperature durability, for example, the fluoropolyether is particularly preferably represented by the formula (1).

In order to achieve sufficient ion conductive properties and favorable improvement of the high-temperature durability, for example, the fluoropolyether is preferably liquid at a temperature within a range of 25°C to 80°C, and is preferably liquid at 25°C.

Examples of the form "liquid at a temperature within a range of 25°C to 80°C" include a form "solid at 25°C and liquid at 50°C" and a form "solid at 50°C and liquid at 80°C". The form "liquid at a low temperature and solid at a high temperature" is not included in the form "liquid at a temperature within a range of 25°C to 80°C" because such a form does not normally exist.

The amount of the fluoropolyether in the composition of the disclosure is preferably 70% by mass or more, more preferably 80% by mass or more, still more preferably 90% by mass or more. The upper limit thereof is not limited and is usually 99.9% by mass or less, preferably 99.5% by mass or less, more preferably 98.5% by mass or less.

Preferred examples of the salt used include lithium salts, sodium salts, ammonium salts, and metal salts, as well as any of those to be used for electrolyte solutions for a variety of batteries, such as liquid salts (ionic liquids), inorganic polymer salts, and organic polymer salts.

Examples of the battery containing the composition of the disclosure as its electrolyte solution include lithium-ion batteries, sodium-ion batteries, magnesium-ion batteries, calcium-ion batteries, and fluoride-ion batteries. Lithium-ion batteries are preferred.

When the composition of the disclosure is used as an electrolyte solution for a lithium-ion battery, the electrolyte salt is preferably a lithium salt.

Any lithium salt may be used. Specific examples thereof include the following: inorganic lithium salts such as $LiPF_6$, $LiBF_4$, $LiClO_4$, $LiAlF_4$, $LiSbF_6$, $LiTaF_6$, $LiWF_7$, $LiAsF_6$, $LiAlCl_4$, LiI, LiBr, LiCl, $LiB_{10}Cl_{10}$, $Li_2SiF_6$, $Li_2PFO_3$, and $LiPO_2F_2$;

lithium tungstate salts such as $LiWOF_5$;

lithium carboxylate salts such as $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, and $CF_3CF_2CF_2CF_2CO_2Li$;

lithium salts containing an S=O group such as $FSO_3Li$, $CH_3SO_3Li$, $CH_2FSO_3Li$, $CHF_2SO_3Li$, $CF_3SO_3Li$, $CF_3CF_2SO_3Li$, $CF_3CF_2CF_2SO_3Li$, $CF_3CF_2CF_2CF_2SO_3Li$, lithium methylsulfate, lithium ethylsulfate ($C_2H_5OSO_3Li$), and lithium 2,2,2-trifluoroethylsulfate;

lithium imide salts such as lithium bis(trifluoromethanesulfone)imide (LiTFSI), lithium bis(monofluorosulfone)imide (LiFSI), $LiN(FCO)_2$, LiN (FCO)(FSO_2), $LiN(FSO_2)_2$, $LiN(FSO_2)(CF_3SO_2)$, $LiN(CF_3SO_2)_2$, $LiN(C_2F_5SO_2)_2$, lithium bis-perfluoroethanesulfonyl imide, lithium cyclic 1,2-perfluoroethanedisulfonyl imide, lithium cyclic 1,3-perfluoropropanedisulfonyl imide, lithium cyclic 1,2-ethanedisulfonyl imide, lithium cyclic 1,3-propanedisulfonyl imide, lithium cyclic 1,4-perfluorobutanedisulfonyl imide, $LiN(CF_3SO_2)(FSO_2)$, $LiN(CF_3SO_2)(C_3F_7SO_2)$, $LiN(CF_3SO_2)(C_4F_9SO_2)$, and $LiN(POF_2)_2$;

lithium methide salts such as $LiC(FSO_2)_3$, LiC (CF_3SO_2)_3, and $LiC(C_2F_5SO_2)_3$; and

fluorine-containing organic lithium salts such as salts represented by the formula: $LiPF_a(C_nF_{2n+1})_{6-a}$ (wherein a is an integer of 0 to 5; and n is an integer of 1 to 6) such as $LiPF_3(C_2F_5)_3$, $LiPF_3(CF_3)_3$, $LiPF_3(iso-C_3F_7)_3$, $LiPF_5(iso-C_3F_7)$, $LiPF_4(CF_3)_2$, and $LiPF_4(C_2F_5)_2$, as well as $LiPF_4(CF_3SO_2)_2$, $LiPF_4(C_2F_5SO_2)_2$, $LiBF_3CF_3$, $LiBF_3C_2F_5$, $LiBF_3C_3F_7$, $LiBF_2(CF_3)_2$, $LiBF_2(C_2F_5)_2$, $LiBF_2(CF_3SO_2)_2$, and $LiBF_2(C_2F_5SO_2)_2$, and LiSCN, $LiB(CN)_4$, $LiB(C_6H_5)_4$, $Li_2(C_2O_4)$, $LiP(C_2O_4)_3$, and $Li_2B_{12}F_bH_{12-b}$ (wherein b is an integer of 0 to 3).

Preferred among these are LiTFSI, LiFSI, $LiPF_6$, $LiBF_4$, $LiSbF_6$, $LiTaF_6$, $LiPO_2F_2$, $FSO_3Li$, $CF_3SO_3Li$, LiN(F-

$SO_2)_2$, $LiN(FSO_2)(CF_3SO_2)$, $LiN(CF_3SO_2)_2$, $LiN(C_2F_5SO_2)_2$, lithium cyclic 1,2-perfluoroethanedisulfonyl imide, lithium cyclic 1,3-perfluoropropanedisulfonyl imide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, and $LiPF_3(C_2F_5)_3$. Particularly preferred are LiTFSI, LiFSI, and $LiPF_6$.

One of these lithium salts may be used alone or two or more thereof may be used in any combination. In combination use of two or more thereof, preferred examples thereof include a combination of $LiPF_6$ and LiTFSI and a combination of LiTFSI and $LiPO_2F_2$, $LiBF_4$, or $FSO_3Li$, each of which have an effect of improving the high-temperature storage characteristics, the load characteristics, and the cycle characteristics.

In another example, an inorganic lithium salt and an organic lithium salt are used in combination. Such a combination has an effect of reducing deterioration due to high-temperature storage. The organic lithium salt is preferably $CF_3SO_3Li$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethanedisulfonyl imide, lithium cyclic 1,3-perfluoropropanedisulfonyl imide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, $LiPF_3(C_2F_5)_3$, or the like.

When the composition of the disclosure is used as an electrolyte solution for a fluoride-ion battery, the electrolyte salt is preferably a fluoride salt.

The fluoride salt may be any fluoride salt that generates fluoride ions, and may be an organic fluoride salt or an inorganic fluoride salt. The fluoride salt may also be an ionic liquid. Specifically, ammonium fluorides, metal fluorides, and the like can be used. Each of these may be used alone or two or more of these may be used in combination. In order to achieve good solubility, ammonium fluoride is preferred.

Specific examples of the metal fluorides include alkali or alkaline earth fluorides (for example, LiF, CsF, $MgF_2$, $BaF_2$), transition metal fluorides (for example, $VF_4$, $FeF_3$, $MoF_6$, $PdF_2$, AgF), main group metal fluorides (for example, $AlF_3$, $PbF_4$, $BiF_3$), and lanthanide or actinide fluorides (for example, $LaF_3$, $YbF_3$, $UF_5$).

Examples of the ammonium fluorides include ammonium hydrogen fluoride and alkylammonium fluoride. In order to achieve good solubility, alkylammonium fluoride is preferred.

The alkylammonium fluoride preferably contains a cation represented by $N^+\text{-}Rx_4$. Each Rx is independently an alkyl group or a fluoroalkyl group, and is preferably an alkyl group. Rx may have a carbon number of, for example, 1 to 10, and may have a carbon number of 5 or less or 3 or less.

The alkyl group and the fluoroalkyl group in the alkylammonium fluoride may be linear or branched. At least one of the alkyl group or the fluoroalkyl group is preferably branched. More preferably, both of a branched alkyl or fluoroalkyl group and a linear alkyl or fluoroalkyl group are contained.

The alkyl group and the fluoroalkyl group have a carbon number of preferably 1 or more, while preferably 10 or less, more preferably 8 or less, still more preferably 6 or less.

The linear alkyl group and the linear fluoroalkyl group have a carbon number of preferably 1 or more, while preferably 10 or less, more preferably 5 or less, still more preferably 3 or less.

The branched alkyl group and the branched fluoroalkyl group have a carbon number of preferably 1 or more, more preferably 3 or more, still more preferably 4 or more, while preferably 10 or less, more preferably 8 or less, still more preferably 6 or less.

The amount of the salt in the composition of the disclosure is preferably 0.1% by mass or more, more preferably 1% by mass or more, while preferably 30% by mass or less, more preferably 20% by mass or less.

The amount of a polyalkylene oxide represented by the following formula (5) in the composition of the disclosure is preferably less than 20% by mass. This improves the chemical stability, represented by oxidation resistance, of the composition.

$$(5) \qquad R^{1B}\text{-}(OCHR^{1A}(CH_2)_jCHR^{2A})_n\text{-}OR^{2B}$$

In the formula, $R^{1A}$ and $R^{2A}$ are each independently a hydrogen atom or a C1-C5 alkyl group;

j is an integer of 0 or 1 or 2,
$R^{1B}$ and $R^{2B}$ are each independently a hydrogen atom or a C1-C3 alkyl group; and
n is an integer of 5 to 1000.

The amount of the polyalkylene oxide represented by the formula (5) in the composition of the disclosure is more preferably 10% by mass or less, still more preferably 5% by mass or less, particularly preferably 1% by mass or less. The lower limit may be, but is not limited to, 0% by mass.

<Electrolyte solution>

The composition of the disclosure is useful in an electrolyte solution as it can improve the high-temperature durability of electrochemical devices.

The disclosure also relates to an electrolyte solution containing the composition of the disclosure.

Preferred ranges of the amount of the fluoropolyether and the amount of the salt in the electrolyte solution of the disclosure are the same as those described above for the composition of the disclosure.

In the electrolyte solution of the disclosure, the fluoropolyether is usually used as a solvent.

The amount of the fluoropolyether relative to the solvent is preferably 70% by volume or more, more preferably 80% by volume or more, still more preferably 90% by volume or more. The upper limit may be, but is not limited to, 10% by mass.

In the electrolyte solution of the disclosure, a solvent other than the fluoropolyether may be used. Examples of the solvent other than the fluoropolyether include those conventionally known as solvents for nonaqueous secondary batteries, such as carbonate-based solvents, ester-based solvents, ether-based solvents, and fluorobenzene-based solvents. Examples of the carbonate-based solvents include cyclic carbonates such as ethylene carbonate, propylene carbonate, butylene carbonate, vinylene carbonate, and fluoroethylene carbonate, and chain carbonates such as dimethyl carbonate, diethyl carbonate, and methyl ethyl carbonate. Examples of the ester-based solvents include cyclic esters such as γ-butyrolactone and γ-valerolactone, and chain esters such as methyl acetate and ethyl acetate. Examples of the ether-based solvents include cyclic ethers such as tetrahydrofuran and 2-methyltetrahydrofuran, and chain ethers such as dimethoxyethane and glyme-based compounds. Examples of the glyme-based compounds include diethylene glycol diethyl ether, triethylene glycol dimethyl ether, and tetraethylene glycol dimethyl ether. Examples of the fluorobenzene-based solvents include 1,3-difluorobenzene, 1,2,4-trifluorobenzene, and 1,2,3,4-tetrafluorobenzene. Each of these may be used alone or two or more of these may be used in combination. In the disclosure, ether-based solvents are preferred, chain ethers are more preferred, and glyme-based compounds are still more preferred.

The compounds described above may also be used in small amounts as additives.

The electrolyte solution of the disclosure has an ion conductivity of preferably $1.0 \times 10^{-7}$ S/cm or more, more preferably $1.0 \times 10^{-6}$ S/cm or more, still more preferably $1.0 \times 10^{-5}$ S/cm or more. The upper limit is preferably, but not limited to, $1.0 \times 10^{-3}$ S/cm or less.

The ion conductivity is a value determined by measurement at 25°C using SevenCompact S230 available from Mettler Toledo.

The electrolyte solution of the disclosure has a Li ion transport number of preferably 0.2 or more, more preferably 0.25 or more, and still more preferably 0.3 or more. The upper limit is preferably, not limited to, 0.5 or less.

The Li ion transport number is a value determined by the following method (pulsed magnetic field gradient NMR measurement).

A pulsed magnetic field gradient NMR measurement is performed at 25°C with the target nuclide $^7$Li using JEOL JNM-ECA400WB. Each self-diffusion coefficient D can be determined from the slope of an approximation line obtained by plotting the left side of the following formula on the vertical axis and k on the horizontal axis:

[Math. 1]

$$\ln\left[\frac{A(g)}{A(0)}\right] = -kD \qquad \left(k = \gamma^2 g^2 \delta^2 (\Delta - \delta/3)\right)$$

wherein A(0) is the peak intensity when no magnetic field gradient pulse is applied, A(g) is the peak intensity at each gradient magnetic field intensity g, $\delta$ is the magnetic field gradient pulse width, $\Delta$ is the diffusion time (100 ms) of the molecule being observed, $\gamma$ is the gyromagnetic ratio, and D is the diffusion coefficient.

<Polymer electrolyte>

The disclosure also relates to a polymer electrolyte containing the electrolyte solution of the disclosure.

Examples of the polymer electrolyte of the disclosure include gel electrolytes obtained by plasticizing a polymer material with the electrolyte solution of the disclosure.

Examples of the polymer material include conventionally known polyethylene oxide and polypropylene oxide, and modified products thereof (JP H08-222270 A, JP 2002-100405 A); fluororesins such as polyacrylate-based polymers, polyacrylonitrile, polyvinylidene fluoride, and vinylidene fluoride-hexafluoropropylene copolymers (JP H04-506726 T, JP H08-507407 T, JP H10-294131 T); and complexes of these fluororesins with hydrocarbon-based resins (JP H11-35765 A, JP H11-86630 A). In particular, polyvinylidene fluoride and vinylidene fluoride-hexafluoropropylene copolymers are preferred.

<Electrochemical device>

The disclosure also relates to an electrochemical device containing the electrolyte solution of the disclosure or the polymer electrolyte of the disclosure.

The electrochemical device of the disclosure preferably includes components such as a positive electrode and a negative electrode. Specifically, the electrochemical device of the disclosure is preferably a secondary battery including these components, particularly preferably a lithium-ion secondary battery including these components.

The positive electrode active material used for the positive electrode may be any material that can electrochemically occlude and release alkali metal ions, and is preferably, for example, a substance containing an alkali metal and at least one transition metal. Specific examples include alkali metal-containing transition metal composite oxides and alkali metal-containing transition metal phosphate compounds. Particularly preferred among these as the positive electrode material are alkali metal-containing transition metal composite oxides, which produce high voltage. Examples of the alkali metal ions include lithium ions, sodium ions, and potassium ions. Preferred are lithium ions.

Examples of the alkali metal-containing transition metal composite oxides include lithium-manganese spinel composite oxides represented by the formula:

$$M_aMn_{2-b}M^1_bO_4$$

(wherein M includes at least one metal selected from the group consisting of Li, Na, and K; $0.9 \leq a$; $0 \leq b \leq 1.5$; and $M^1$ includes at least one metal selected from the group consisting of Fe, Co, Ni, Cu, Zn, Al, Sn, Cr, V, Ti, Mg, Ca, Sr, B, Ga, In, Si, and Ge);

lithium-nickel composite oxides represented by the formula:

$$MNi_{1-c}M^2_cO_2$$

(wherein M includes at least one metal selected from the group consisting of Li, Na, and K; $0 \leq c \leq 0.5$; and $M^2$ includes at least one metal selected from the group consisting of Fe, Co, Mn, Cu, Zn, Al, Sn, Cr, V, Ti, Mg, Ca, Sr, B, Ga, In, Si, and Ge); and

lithium-cobalt composite oxides represented by the formula:

$$MCo_{1-d}M^3_dO_2$$

(wherein M includes at least one metal selected from the group consisting of Li, Na, and K; $0 \leq d \leq 0.5$; and $M^3$ includes at least one metal selected from the group consisting of Fe, Ni, Mn, Cu, Zn, Al, Sn, Cr, V, Ti, Mg, Ca, Sr, B, Ga, In, Si, and Ge). In the above formula, M is preferably a metal selected from the group consisting of Li, Na, and K, more preferably Li or Na, still more preferably Li.

In order to achieve high-energy-density, high-output secondary batteries, preferred among these are $MCoO_2$, $MMnO_2$, $MNiO_2$, $MMn_2O_4$, $MNi_{0.8}Co_{0.15}Al_{0.05}O_2$, and $MNi_{1/3}Co_{1/3}Mn_{1/3}O_2$, and preferred is a compound represented by the following formula.

$$MNi_hCo_iMn_jM^5_kO_2$$

In the formula, M includes at least one metal selected from the group consisting of Li, Na, and K; $M^5$ includes at least one selected from the group consisting of Fe, Cu, Zn, Al, Sn, Cr, V, Ti, Mg, Ca, Sr, B, Ga, In, Si, and Ge; and $(h + i + j + k) = 1.0$, $0 \leq h \leq 1.0$, $0 \leq i \leq 1.0$, $0 \leq j \leq 1.5$, and $0 \leq k \leq 0.2$.

Examples of the alkali metal-containing transition metal phosphate compound include a compound represented by the following formula:

$$M_eM^4_f(PO_4)_g$$

wherein M includes at least one metal selected from the group consisting of Li, Na, and K; $M^4$ includes at least one selected from the group consisting of V, Ti, Cr, Mn, Fe, Co, Ni, and Cu; and $0.5 \leq e \leq 3$, $1 \leq f \leq 2$, and $1 \leq g \leq 3$. In the above formula, M is preferably a metal selected from the group consisting of Li, Na, and K, more preferably Li or Na, still more preferably Li.

The transition metal of the alkali metal-containing transition metal phosphate compound is preferably V, Ti, Cr, Mn, Fe, Co, Ni, Cu, or the like. Specific examples thereof include iron phosphates such as $LiFePO_4$, $Li_3Fe_2(PO_4)_3$, and $LiFeP_2O_7$, cobalt phosphates such as $LiCoPO_4$, and those obtained by replacing some of transition metal atoms as main components of these lithium transition metal phosphate compounds with another element such as Al, Ti, V, Cr, Mn, Fe, Co, Li, Ni, Cu, Zn, Mg, Ga, Zr, Nb, or Si. The lithium-containing transition metal phosphate compound preferably has an olivine structure.

Other examples of the positive electrode active material include a lithium-nickel composite oxide. The lithium-nickel composite oxide is preferably a positive electrode active material represented by the following formula:

$$Li_yNi_{1-x}M_xO_2$$

wherein $0.01 \leq x \leq 0.7$, $0.9 \leq y \leq 2.0$, and M is a metal atom (other than Li and Ni).

Other examples of the positive electrode active material also include $MFePO_4$, $MNi_{0.8}Co_{0.2}O_2$, $M_{1.2}Fe_{0.4}Mn_{0.4}O_2$, $MNi_{0.5}Mn_{1.5}O_2$, $MV_3O_6$, and $M_2MnO_3$. In particular, a positive electrode active material such as $M_2MnO_3$ or $MNi_{0.5}Mn_{1.5}O_2$ is preferred because the crystal structure thereof does not collapse even when the secondary battery is operated at a voltage exceeding 4.4 V or at a voltage of 4.6 V or higher. Thus, an electrochemical device such as a secondary battery including a positive electrode material containing any of the above-exemplified positive electrode active materials is preferred because the remaining capacity thereof is less likely to decrease and the percentage increase in resistance thereof is less likely to change even after storage at high temperature and the battery performance thereof may not be impaired even when the battery is driven at high voltage.

Other examples of the positive electrode active material also include solid solution materials of $M_2MnO_3$ and $MM^6O_2$ (wherein M is at least one metal selected from the group consisting of Li, Na, and K; and $M^6$ is a transition metal such as Co, Ni, Mn, or Fe).

The solid solution material is, for example, an alkali metal manganese oxide represented by the formula $M_x[Mn_{(1-y)}M^7_y]O_z$. In the formula, M includes at least one metal selected from the group consisting of Li, Na, and K; and $M^7$ includes at least one metal element other than M or Mn, containing, for example, one or more elements selected from the group consisting of Co, Ni, Fe, Ti, Mo, W, Cr, Zr, and Sn. The values of x, y, and z in the formula are within the ranges of $1 < x < 2$, $0 \leq y < 1$, and $1.5 < z < 3$, respectively. In particular, a manganese-containing solid solution material such as $Li_{1.2}Mn_{0.5}Co_{0.14}Ni_{0.14}O_2$, which is a $Li_2MnO_3$-based solid solution of $LiNiO_2$ and $LiCoO_2$, is preferred because it can provide an alkali metal ion secondary battery with a high energy density.

In order to improve the continuous charge characteristics, the positive electrode active material preferably contains lithium phosphate. Lithium phosphate may be used in any manner, and is preferably used in admixture with the positive electrode active material. The lower limit of the amount of lithium phosphate used is preferably 0.1% by mass or more, more preferably 0.3% by mass or more, still more preferably 0.5% by mass or more, relative to the sum of the amounts of the positive electrode active material and lithium phosphate. The upper limit thereof is preferably 10% by mass or less, more preferably 8% by mass or less, still more preferably 5% by mass or less.

To a surface of the positive electrode active material may be attached a substance having a composition different from that of the positive electrode active material. Examples of the surface-attached substance include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; and carbon.

These surface-attached substances may be attached to a surface of the positive electrode active material by, for example, a method of dissolving or suspending the substance in a solvent, impregnating the positive electrode active material with the solution or suspension, and drying the impregnated material; a method of dissolving or suspending a precursor of the substance in a solvent, impregnating the positive electrode active material with the solution or suspension, and heating the material and the precursor to cause a reaction therebetween; or a method of adding the substance to a precursor of the positive electrode active material and simultaneously sintering the substance and the precursor. In the case of attaching carbon, for example, a carbonaceous material in the form of activated carbon may be mechanically attached to the surface afterward.

The lower limit of the amount of the surface-attached substance, in terms of the mass relative to the amount of the positive electrode active material, is preferably 0.1 ppm or more, more preferably 1 ppm or more, still more preferably 10 ppm or more, while the upper limit thereof is preferably 20% or less, more preferably 10% or less, still more preferably 5% or less. The surface-attached substance can reduce oxidation of the electrolyte on the surface of the positive electrode active material and can thereby improve the battery life. Too small an amount of the substance may fail to sufficiently provide this effect. Too large an amount thereof may hinder the entrance and exit of lithium ions, increasing the resistance.

Particles of the positive electrode active material may have any shape conventionally used, such as a bulky shape, a polyhedral shape, a spherical shape, an ellipsoidal shape, a plate shape, a needle shape, or a pillar shape. The primary particles may agglomerate to form secondary particles.

The positive electrode active material has a tap density of preferably $0.5 \text{ g/cm}^3$ or higher, more preferably $0.8 \text{ g/cm}^3$ or higher, still more preferably $1.0 \text{ g/cm}^3$ or higher. The positive electrode active material having a tap density below the lower limit may cause an increased amount of a dispersion medium required and increased amounts of a conductive material and a binder required in formation of the positive electrode active material layer, as well as a limited packing fraction of the positive electrode active material in the positive electrode active material layer, resulting in a limited battery capacity. Using a complex oxide powder having a high tap density enables formation of a high-density positive electrode active material layer. The tap density is commonly preferably as high as possible with no upper limit. Still, too high a tap density may be a rate-determining factor of diffusion of lithium ions in the positive electrode active material layer through the medium of the electrolyte, easily impairing the load characteristics. Thus, the upper limit is preferably 4.0 g/cm$^3$ or lower, more preferably 3.7 g/cm$^3$ or lower, still more preferably 3.5 g/cm$^3$ or lower.

The tap density is determined as the powder packing density (tap density) g/cm$^3$ when 5 to 10 g of the positive electrode active material powder is packed into a 10-ml glass graduated cylinder and the cylinder is tapped 200 times with a stroke of about 20 mm.

The particles of the positive electrode active material have a median diameter d50 (or a secondary particle size in the case where the primary particles agglomerate to form secondary particles) of preferably 0.3 $\mu$m or greater, more preferably 0.5 $\mu$m or greater, still more preferably 0.8 $\mu$m or greater, most preferably 1.0 $\mu$m or greater, while preferably 30 $\mu$m or smaller, more preferably 27 $\mu$m or smaller, still more preferably 25 $\mu$m or smaller, most preferably 22 $\mu$m or smaller. The particles having a median diameter below the lower limit may fail to provide a product with a high tap density. The particles having a median diameter greater than the upper limit may cause prolonged diffusion of lithium in the particles, impairing the battery performance. Mixing two or more positive electrode active materials having different median diameters d50 can further improve the easiness of packing in formation of a positive electrode.

The median diameter d50 is determined using a known laser diffraction/scattering particle size distribution analyzer. In the case of using LA-920 available from Horiba, Ltd. as the particle size distribution analyzer, the dispersion medium used in the measurement is a 0.1% by mass sodium hexametaphosphate aqueous solution and the measurement refractive index is set to 1.24 after 5-minute ultrasonic dispersion.

In the case where the primary particles agglomerate to form secondary particles, the average primary particle size of the positive electrode active material is preferably 0.05 $\mu$m or greater, more preferably 0.1 $\mu$m or greater, still more preferably 0.2 $\mu$m or greater. The upper limit thereof is preferably 5 $\mu$m or smaller, more preferably 4 $\mu$m or smaller, still more preferably 3 $\mu$m or smaller, most preferably 2 $\mu$m or smaller. The primary particles having an average primary particle size greater than the upper limit may have difficulty in forming spherical secondary particles, adversely affecting the powder packing, or may have a greatly reduced specific surface area, highly possibly impairing the battery performance such as output characteristics. In contrast, the primary particles having an average primary particle size below the lower limit may commonly be insufficiently grown crystals, causing poor charge and discharge reversibility, for example.

The average primary particle size is measured by scanning electron microscopic (SEM) observation. Specifically, the average primary particle size is determined as follows. A photograph at a magnification of 10000x is first taken. Any 50 primary particles are selected and the maximum length between the left and right boundary lines of each primary particle is measured along the horizontal line. Then, the average value of the maximum lengths is calculated, which is defined as the average primary particle size.

The positive electrode active material has a BET specific surface area of preferably 0.1 m$^2$/g or larger, more preferably 0.2 m$^2$/g or larger, still more preferably 0.3 m$^2$/g or larger. The upper limit thereof is preferably 50 m$^2$/g or smaller, more preferably 40 m$^2$/g or smaller, still more preferably 30 m$^2$/g or smaller. The positive electrode active material having a BET specific surface area smaller than the above range may easily impair the battery performance. The positive electrode active material having a BET specific surface area larger than the above range may less easily have an increased tap density, easily causing a difficulty in processing the material in formation of the positive electrode active material layer.

The BET specific surface area is defined by a value determined by single point BET nitrogen adsorption utilizing a gas flow method using a surface area analyzer (e.g., fully automatic surface area measurement device, available from Ohkura Riken Co., Ltd.), a sample pre-dried in nitrogen stream at 150°C for 30 minutes, and a nitrogen-helium gas mixture with the nitrogen pressure relative to the atmospheric pressure being accurately adjusted to 0.3.

In the case where the secondary battery of the disclosure is used as a large-size lithium-ion secondary battery for hybrid vehicles or distributed generation, it needs to achieve high output. Thus, the particles of the positive electrode active material are preferably mainly composed of secondary particles. The particles of the positive electrode active material preferably include 0.5 to 7.0% by volume of fine particles having an average secondary particle size of 40 $\mu$m or smaller and having an average primary particle size of 1 $\mu$m or smaller. The presence of fine particles having an average primary particle size of 1 $\mu$m or smaller can enlarge the contact area with the electrolyte and enables more rapid diffusion of lithium ions between the electrode mixture and the electrolyte, resulting in improved output performance of a battery.

The positive electrode active material may be produced by any common method of producing an inorganic compound. In particular, a spherical or ellipsoidal active material can be produced by various methods. For example, a material substance of transition metal is dissolved or crushed and dispersed in a solvent such as water, and the pH of the solution or dispersion is adjusted under stirring to form a spherical precursor. The precursor is recovered and, if necessary, dried. Then, a Li source such as LiOH, Li$_2$CO$_3$, or LiNO$_3$ is added thereto and the mixture is sintered at high temperature, thereby providing an active material.

One positive electrode active material may be used alone or two or more thereof having different compositions may be used in any combination at any ratio. Preferred examples of the combination in this case include a combination of $LiCoO_2$ with a ternary system such as $LiNi_{0.33}Co_{0.33}Mn_{0.33}O_2$, a combination of $LiCoO_2$ with either $LiMn_2O_4$ or one obtained by replacing one or more Mn atoms in $LiMn_2O_4$ with a different transition metal, and a combination of $LiFePO_4$ with either $LiCoO_2$ or one obtained by replacing one or more Co atoms in $LiCoO_2$ with a different transition metal.

In order to achieve a high battery capacity, the amount of the positive electrode active material is preferably 50 to 99.5% by mass, more preferably 80 to 99% by mass, of the electrode mixture. The amount of the positive electrode active material in the positive electrode active material layer is preferably 80% by mass or more, more preferably 82% by mass or more, particularly preferably 84% by mass or more. The upper limit of the amount is preferably 99% by mass or less, more preferably 98% by mass or less. Too small an amount of the positive electrode active material in the positive electrode active material layer may lead to an insufficient electric capacity. In contrast, too large an amount thereof may lead to insufficient strength of the positive electrode.

The negative electrode active material used for the negative electrode is not limited, and may be, for example, any one selected from lithium metal; a material containing a carbonaceous material such as artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor-grown carbon fiber, natural graphite, or non-graphitizable carbon; a silicon-containing compound such as silicon or a silicon alloy; and $Li_4Ti_5O_{12}$, or a mixture of two or more of these. Among these, a material at least partially containing a carbonaceous material and/or a silicon-containing compound can be particularly suitably used.

The negative electrode active material suitably contains silicon as a constitutional element. With a negative electrode active material containing silicon as a constitutional element, a high-capacity battery can be produced.

As a material containing silicon, silicon particles, particles having a structure where silicon fine particles are dispersed in a silicon-based compound, silicon oxide particles represented by the formula: $SiO_x$ ($0.5 \leq x \leq 1.6$), or a mixture of these is/are preferred. The use of any of these can provide a negative electrode mixture for lithium-ion secondary batteries with higher initial charge-discharge efficiency, high capacity, and excellent cycle characteristics.

The term "silicon oxide" herein is a generic term for amorphous silicon oxides. Silicon oxides prior to disproportionation are represented by the formula: $SiO_x$ ($0.5 \leq x \leq 1.6$) where x preferably satisfies $0.8 \leq x < 1.6$, more preferably $0.8 \leq x < 1.3$. Such a silicon oxide can be obtained, for example, by heating a mixture of silicon dioxide and metallic silicon to generate silicon monoxide gas, followed by cooling and deposition of the silicon monoxide gas.

The particles having a structure where silicon fine particles are dispersed in a silicon-based compound can be obtained, for example, by a method including sintering a mixture of silicon fine particles and a silicon-based compound or by a disproportionation reaction in which silicon oxide particles (SiOx) prior to disproportionation are heated in an inert non-oxidizing atmosphere such as an argon atmosphere at a temperature of 400°C or higher, suitably 800°C to 1100°C. A material obtained by the latter method is particularly suitable because silicon microcrystals are uniformly dispersed. The disproportionation reaction as described above can adjust the size of silicon nanoparticles to 1 to 100 nm. The silicon oxide in the particles having a structure in which silicon nanoparticles are dispersed in silicon oxide is preferably silicon dioxide. Dispersion of silicon nanoparticles (crystals) in an amorphous silicon oxide can be confirmed by transmission electron microscopy.

The physical properties of the silicon-containing particles can be appropriately determined according to the aimed composite particles.

For example, the average particle size is preferably 0.1 to 50 $\mu$m. The lower limit is more preferably 0.2 $\mu$m or greater, still more preferably 0.5 $\mu$m or greater. The upper limit is more preferably 30 $\mu$m or smaller, still more preferably 20 $\mu$m or smaller. The average particle size is expressed as a weight average particle size determined by particle size distribution measurement by a laser diffraction method.

The BET specific surface area is preferably 0.5 to 100 $m^2$/g, more preferably 1 to 20 $m^2$/g. With the BET specific surface area of 0.5 $m^2$/g or larger, there is no risk that the adhesiveness of the negative electrode material applied to the electrode decreases and the battery characteristics are impaired. A BET specific surface area of 100 $m^2$/g or less can increase the proportion of silicon dioxide on the particle surface, which eliminates the risk of battery capacity reduction upon use of the silicon fine particles as a negative electrode material for a lithium-ion secondary battery.

The silicon-containing particles are provided with conductivity when coated with carbon, which improves the battery characteristics. Examples of the method for imparting conductivity include a method including mixing the silicon-containing particles with conductive particles such as graphite particles, a method including coating the silicon-containing particle surface with a carbon film, and a method combining these two methods. Preferred is a method including coating with a carbon film, and more preferred is a method including chemical vapor deposition (CVD).

In order to increase the capacity of the resulting electrode mixture, the amount of the negative electrode active material in the electrode mixture is preferably 40% by mass or more, more preferably 50% by mass or more, particularly preferably 60% by mass or more. The upper limit thereof is preferably 99% by mass or less, more preferably 98% by mass or less.

The electrode mixture constituting the positive electrode or the negative electrode may contain a conductive aid.

Specific examples of the conductive aid include metal materials such as copper, nickel, and gold, and carbon materials such as graphite, e.g., natural graphite and artificial graphite, carbon black, e.g., acetylene black, Ketjen black, channel black, furnace black, lamp black, and thermal black, and amorphous carbon, e.g., needle coke, carbon nanotube, fullerene, and VGCF. One of these may be used alone or two or more thereof may be used in any combination at any ratio.

The conductive aid is used in an amount of usually 0.01% by mass or more, preferably 0.1% by mass or more, more preferably 1% by mass or more, while usually 50% by mass or less, preferably 30% by mass or less, more preferably 15% by mass or less, in the electrode mixture.

The electrode mixture may contain a thickening agent.

Examples of the thickening agent include carboxymethyl cellulose, methyl cellulose, hydroxymethyl cellulose, ethyl cellulose, polyvinyl alcohol, oxidized starch, phosphorylated starch, casein, polyvinyl pyrrolidone, and their salts. One of these may be used alone or two or more thereof may be used in any combination at any ratio.

The thickening agent is used in an amount of usually 0.1% by mass or more, preferably 0.2% by mass or more, more preferably 0.3% by mass or more, while usually 5% by mass or less, preferably 3% by mass or less, more preferably 2% by mass or less, relative to the electrode active material.

The electrode mixture may contain a binder.

Non-limiting examples of the binder include resin polymers such as polyethylene, polypropylene, polyethylene terephthalate, polymethyl methacrylate, aromatic polyamides, chitosan, alginic acid, polyacrylic acid, polyimide, cellulose, and nitro cellulose; rubbery polymers such as styrene-butadiene rubber (SBR), isoprene rubber, butadiene rubber, fluoroelastomers, acrylonitrile-butadiene rubber (NBR), and ethylene-propylene rubber; styrene-butadiene-styrene block copolymers and hydrogenated products thereof; thermoplastic elastomeric polymers such as ethylene-propylene-diene terpolymers (EPDM), styrene-ethylene-butadiene-styrene copolymers, and styreneisoprene-styrene block copolymers and hydrogenated products thereof; soft resin polymers such as syndiotactic-1,2-polybutadiene, polyvinyl acetate, ethylene-vinyl acetate copolymers, and propylene-$\alpha$-olefin copolymers; fluoropolymers such as polyvinylidene fluoride, vinylidene fluoride copolymers, polytetrafluoroethylene, and tetrafluoroethylene-ethylene copolymers; and polymer compositions having ion conductivity of alkali metal ions (especially, lithium ions). One of these may be used alone or two or more thereof may be used in any combination at any ratio.

The binder is used in an amount of usually 0.1% by mass or more, preferably 0.5% by mass or more, more preferably 0.6% by mass or more, while usually 20% by mass or less, preferably 15% by mass or less, more preferably 10% by mass or less, still more preferably 8% by mass or less, relative to the electrode active material.

The positive electrode is preferably composed of a current collector and an electrode mixture sheet containing the positive electrode active material. Examples of the material of the current collector for a positive electrode include metal materials such as aluminum, titanium, tantalum, stainless steel, and nickel, and alloys thereof; and carbon materials such as carbon cloth and carbon paper. Preferred is any metal material, especially aluminum or an alloy thereof.

In the case of a metal material, the current collector may be in the form of metal foil, metal cylinder, metal coil, metal plate, expanded metal, punched metal, metal foam, or the like. In the case of a carbon material, it may be in the form of carbon plate, carbon film, carbon cylinder, or the like. Preferred among these is metal foil. The metal foil may be in the form of mesh, as appropriate. The metal foil may have any thickness, and the thickness is usually 1 $\mu$m or greater, preferably 3 $\mu$m or greater, more preferably 5 $\mu$m or greater, while usually 1 mm or smaller, preferably 100 $\mu$m or smaller, more preferably 50 $\mu$m or smaller. The metal foil having a thickness smaller than this range may have insufficient strength as a current collector. Conversely, the metal foil having a thickness greater than the above range may have poor handleability.

In order to reduce the electric contact resistance between the current collector and the positive electrode active material layer, the current collector also preferably has a conductive aid applied on the surface thereof. Examples of the conductive aid include carbon and noble metals such as gold, platinum, and silver.

The positive electrode may be produced by a usual method. In an exemplary method, the electrode mixture sheet and the current collector are laminated via an adhesive, followed by vacuum drying.

The positive electrode mixture sheet has a density of preferably 2.50 g/cm$^3$ or higher, more preferably 2.80 g/cm$^3$ or higher, still more preferably 3.00 g/cm$^3$ or higher, while preferably 3.80 g/cm$^3$ or lower, more preferably 3.70 g/cm$^3$ or lower, still more preferably 3.60 g/cm$^3$ or lower. The positive electrode mixture sheet having a density higher than the above range may cause low permeability of the electrolyte solution toward the vicinity of the interface between the current collector and the active material, and poor charge and discharge characteristics particularly at a high current density, failing to provide high output. The positive electrode mixture sheet having a density lower than the above range may cause poor conductivity between the active materials and increase the battery resistance, failing to provide high output.

The positive electrode may have any thickness. In order to achieve high capacity and high output, the lower limit of the thickness of the mixture layer on one side of the current collector excluding the thickness of the metal foil of the current collector is 10 $\mu$m or greater, more preferably 20 $\mu$m or greater, while preferably 500 $\mu$m or smaller, more preferably

450 $\mu$m or smaller.

The negative electrode is preferably composed of a current collector and an electrode mixture sheet containing the negative electrode active material. Examples of the material of the current collector for a negative electrode include metal materials such as copper, nickel, titanium, tantalum, and stainless steel, and alloys thereof; and carbon materials such as carbon cloth and carbon paper. Preferred is any metal material, especially copper, nickel, or an alloy thereof.

In the case of a metal material, the current collector may be in the form of metal foil, metal cylinder, metal coil, metal plate, expanded metal, punched metal, metal foam, or the like. In the case of a carbon material, it may be in the form of carbon plate, carbon film, carbon cylinder, or the like. Preferred among these is metal foil. The metal foil may be in the form of mesh, as appropriate. The metal foil may have any thickness, and the thickness is usually 1 $\mu$m or greater, preferably 3 $\mu$m or greater, more preferably 5 $\mu$m or greater, while usually 1 mm or smaller, preferably 100 $\mu$m or smaller, more preferably 50 $\mu$m or smaller. The metal foil having a thickness smaller than this range may have insufficient strength as a current collector. Conversely, the metal foil having a thickness greater than the above range may have poor handleability.

The negative electrode may be produced by a usual method. In an exemplary method, the electrode mixture sheet and the current collector are laminated via an adhesive, followed by vacuum drying.

The negative electrode mixture has a density of preferably 1.3 g/cm$^3$ or higher, more preferably 1.4 g/cm$^3$ or higher, still more preferably 1.5 g/cm$^3$ or higher, while preferably 2.0 g/cm$^3$ or lower, more preferably 1.9 g/cm$^3$ or lower, still more preferably 1.8 g/cm$^3$ or lower. The negative electrode mixture having a density higher than the above range may cause low permeability of the electrolyte solution toward the vicinity of the interface between the current collector and the active material, and poor charge and discharge characteristics particularly at a high current density, failing to provide high output. The negative electrode mixture having a density lower than the above range may cause poor conductivity between the active materials and increase the battery resistance, failing to provide high output.

The negative electrode may have any thickness. In order to achieve a high capacity and high output, the lower limit of the thickness of the mixture layer on one side of the current collector excluding the thickness of the metal foil of the current collector is preferably 10 $\mu$m or greater, more preferably 20 $\mu$m or greater, while preferably 500 $\mu$m or smaller, more preferably 450 $\mu$m or smaller.

The secondary battery containing an electrolyte solution of the disclosure preferably further includes a separator. The separator may be formed from any known material and may have any known shape as long as the resulting separator is stable to the electrolyte solution and is excellent in a liquid-retaining ability. The separator is preferably in the form of a porous sheet or a nonwoven fabric formed from a material stable to the electrolyte solution, such as resin, glass fiber, or inorganic matter, and having an excellent liquid-retaining ability.

Examples of the material of a resin or glass-fiber separator include polyolefins such as polyethylene and polypropylene, aromatic polyamides, polytetrafluoroethylene, polyether sulfone, and glass filters. One of these materials may be used alone or two or more thereof may be used in any combination at any ratio, for example, in the form of a polypropylene/polyethylene bilayer film or a polypropylene/polyethylene/polypropylene trilayer film. In order to achieve good permeability of the electrolyte solution and a good shut-down effect, the separator is preferably a porous sheet or a nonwoven fabric formed from a polyolefin such as polyethylene or polypropylene.

The separator may have any thickness, and the thickness is usually 1 $\mu$m or greater, preferably 5 $\mu$m or greater, more preferably 8 $\mu$m or greater, while usually 50 $\mu$m or smaller, preferably 40 $\mu$m or smaller, more preferably 30 $\mu$m or smaller. The separator thinner than the above range may have poor insulation and poor mechanical strength. The separator thicker than the above range may cause not only poor battery performance such as poor rate characteristics but also a low energy density of the whole electrolyte battery.

Examples of the inorganic matter include oxides such as alumina and silicon dioxide, nitrides such as aluminum nitride and silicon nitride, and sulfates such as barium sulfate and calcium sulfate, each in the form of particles or fibers.

The separator is in the form of a thin film such as a nonwoven fabric, a woven fabric, or a microporous film. The thin film favorably has a pore size of 0.01 to 1 $\mu$m and a thickness of 5 to 50 $\mu$m. Instead of the above separate thin film, the separator may have a structure in which a composite porous layer containing particles of the above inorganic matter is disposed on a surface of one or each of the positive and negative electrodes using a resin binder. For example, alumina particles having a 90% particle size of smaller than 1 $\mu$m may be applied to the respective surfaces of the positive electrode with a fluororesin used as a binder to form a porous layer.

The external case may be made of any material that is stable to an electrolyte to be used. Specific examples thereof include metals such as nickel-plated steel plates, stainless steel, aluminum and aluminum alloys, and magnesium alloys, and a layered film (laminate film) of resin and aluminum foil. In order to reduce weight, a metal such as aluminum or an aluminum alloy or a laminate film is favorably used.

An external case made of metal may have a sealed-up structure formed by welding the metal by laser welding, resistance welding, or ultrasonic welding, or a caulking structure using the metal with a resin gasket in between. An external case made of a laminate film may have a sealed-up structure formed by hot-melting resin layers. In order to improve the sealability, a resin that is different from the resin of the laminate film may be disposed between the resin layers.

Especially, in the case of forming a sealed-up structure by hot-melting the resin layers with current collecting terminals in between, metal and resin are to be bonded. Thus, the resin to be disposed between the resin layers is favorably a resin having a polar group or a modified resin having a polar group introduced therein.

The secondary battery obtainable by use of the electrolyte solution may have any shape, such as a cylindrical shape, a square shape, a laminate shape, a coin shape, or a large-size shape. The shapes and the structures of the positive electrode, the negative electrode, and the separator may be changed in accordance with the shape of the battery.

<Fluoropolyether>

The disclosure also relates to a fluoropolyether represented by the following formula (2A):

$$(2A) \qquad R^2\text{-}Rb^2\text{-}O\text{-}Ra^2\text{-}Rb^2\text{-}R^2$$

wherein $Ra^2$ is a polyoxyalkylene group containing 4 to 50 fluorine-free oxyalkylene units;

the oxyalkylene units in $Ra^2$ are each independently $-CH_2CH_2O-$ or $-CH_2CH(J)O-$;

each J is independently an alkyl group or an aryl group;

each $Rb^2$ is independently a fluoropolyether group represented by the following formula (4A); and

each $R^2$ is independently a hydrogen atom, a hydroxy group, a fluorine atom, a C1-C3 alkyl group, an aryl group, a carboxylic acid group, or a C1-C3 fluoroalkyl group:

$$(4A) \qquad -Rf^1\text{-}Rf\text{-}O\text{-}Rf^2-$$

-wherein $Rf^1$ and $Rf^2$ are each independently a C1-C16 alkylene group optionally substituted with a fluorine atom, and Rf is a divalent fluoropolyether group.

The fluoropolyether above, which is a new compound, dissolves salts and has sufficient ion conductive properties, thus being usable as a solvent in electrolyte solutions. When used in an electrolyte solution or the like, the fluoropolyether can improve the high-temperature durability (especially the cycle characteristic at high temperatures) of electrochemical devices. The fluoropolyether is also flame retardant and more electrochemically stable than common solvents for electrolyte solutions, and thus can improve the handleability of electrochemical devices. The fluoropolyether also has a favorable transport number.

Suitable embodiments of the fluoropolyether are the same as those of the fluoropolyether represented by the formula (2).

It should be appreciated that a variety of modifications and changes in the structure and other details may be made to the aforementioned embodiments without departing from the spirit and scope of the claims.

EXAMPLES

The disclosure is described with reference to examples, but the disclosure is not intended to be limited by these examples.

The following compounds were used. Compounds 1-1 to 1-9 were liquid at 25°C.

<Compound 1-1> $\quad CH_3O(CH_2CH_2O)_{x1}CH_2CF_2(OCF_2CF_2)_y(OCF_2)_zOCF_2CH_2O(CH_2CH_2O)_{x2}CH_3$

(x1: 4, y: 12.3 on average, z: 10.2 on average, x2: 4, the number average molecular weight of $(CH_2CH_2O)_{x1}$: 176, the number average molecular weight of $(CH_2CH_2O)_{x2}$: 176)

<Compound 1-2>

Compound having the same structure as Compound 1-1 (x1: 8.4 on average, y: 12.3 on average, z: 10.2 on average, x2: 8.4 on average, the number average molecular weight of $(CH_2CH_2O)_{x1}$: 400, the number average molecular weight of $(CH_2CH_2O)_{x2}$: 400)

<Compound 1-3> $\quad CF_2(CF_3)CF_2(OCF(CF_3)CF_2)_xOCF(CF_3)CH_2O(CH_2CH_2O)_yCH_3$

(x: 7 on average, y: 4, the number average molecular weight of $(CH_2CH_2O)_y$: 176)

<Compound 1-4>

Compound having the same structure as Compound 1-3 (x: 9.4 on average, y: 4, the number average molecular weight of $(CH_2CH_2O)_y$: 176)

<Compound 1-5>

Compound having the same structure as Compound 1-3 (x: 14.3 on average, y: 4, the number average molecular weight of $(CH_2CH_2O)_y$: 176)

<Compound 1-6> $CF_3CF_2(OCF_2CF_2CF_2)_xOCF_2CF_2CH_2O(CH_2CH_2O)_yCH_3$

(x: 11 on average, y: 4, the number average molecular weight of $(CH_2CH_2O)_y$: 176)

<Compound 1-7> $CF_3CF_2(OCF_2CF_2)_x(OCF_2)_yOCF_2CH_2O(CH_2CH_2O)_zCH_3$

(x: 15.5 on average, y: 13.0 on average, z: 4, the number average molecular weight of $(CH_2CH_2O)_z$: 176)

<Compound 1-8> $CF_3CF_2(OCF_2CF_2)_{x1}(OCF_2)_{y1}OCF_2CH_2O(CH_2CH_2O)_zCH_2CF_2(OCF_2CF_2)_{x2}(OCF_2)_{y2}OCF_2CF_3$

(x1: 15.5 on average, y1: 13.0 on average, z: 4.1 on average, x2: 15.5 on average, y2: 13.0 on average, the number average molecular weight of $(CH_2CH_2O)_z$: 200)

<Compound 1-9> $CF_2(CF_3)CF_2(OCF(CF_3)CF_2)_xOCF(CF_3)CH_2O(CH_2CH_2O)_yCH_2C(CF_3)F(OCF_2C(CF_3)F)_zOCF_2C(CF_3)F_2$

(x: 7 on average, y: 4.1 on average, z: 7 on average, the number average molecular weight of $(CH_2CH_2O)_y$: 200)

<Compound 2-1>

Ethyl methyl carbonate (EMC, available from Kishida Chemical Co., Ltd.)

<Compound 2-2>

Polyethylene glycol 200 (available from Tokyo Chemical Industry Co., Ltd.)

<Compound 2-3>

Poly(ethylene glycol methyl ether) 220 (available from Kanto Chemical Co., Inc.)

<Compound 2-4> Fomblin oil M07 (available from Solvay) $RO(CF_2CF_2O)_x(CF_2O)_yR$

(R: $CF_3$ and $CF_2CF_3$ are present in an average ratio of 1:0.21, x: 29.0 on average, y: 32.2)

<Compound 2-5> Fluorolink E10H (available from Solvay) $HO(CH_2CH_2O)_{x1}CH_2CF_2O(CF_2CF_2O)_{x2}(CF_2O)_yCF_2CH_2O(CH_2CH_2O)_{x3}H$

(x1: 1.27 on average, y: 8.16 on average, x2: 7.09 on average, x3: 1.27 on average)

<Compound 2-6> Fluorolink D (available from Solvay) $HOCH_2CF_2O(CF_2CF_2O)_x(CF_2O)_yCF_2CH_2OH$

(x: 12.0 on average, y: 10.8 on average)

(Synthesis Example 1) Synthesis of Compound 1-1

A reaction vessel purged with nitrogen was charged with 600 mg of sodium hydroxide (available from Fujifilm Wako Pure Chemical Corporation, 15.3 mmol), 30 g of 1,3-bis(trifluoromethyl)benzene (available from Tokyo Chemical Industry Co., Ltd.), and 10 g of dialcohol-terminated fluoropolyether (available from Solvay, Fomblin D2, 5.1 mmol), followed by stirring with heating at 70°C for three hours. The temperature inside the vessel was set to 65°C, and 5.5 g of triethylene glycol-2-bromoethyl methyl ether (available from Tokyo Chemical Industry Co., Ltd., 20.4 mmol) was dropped from a dropping funnel over 10 minutes, followed by stirring with heating for six hours. After returning to room temperature, 5 ml of 1 N hydrochloric acid was added to the reaction solution, followed by stirring for three hours. This solution was washed four times with pure water, and 2 g of magnesium sulfate was added to the separated organic layer, so that the organic layer was dried. Magnesium sulfate was removed from the treated solution by filtration. Volatile components were distilled off from the treated solution, followed by drying for three hours at 100°C, whereby Compound 1-1 was obtained.

(Synthesis Example 2) Synthesis of tosylate of polyethylene glycol monomethyl ether

A reaction vessel purged with nitrogen was charged with 8.0 g of polyethylene glycol monomethyl ether 400 (available from Tokyo Chemical Industry Co., Ltd., average molecular weight: 380 to 420, 20.0 mmol), 25 mL of tetrahydrofuran (available from Tokyo Chemical Industry Co., Ltd.), and 4.7 g of p-toluenesulfonyl chloride (available from Tokyo Chemical Industry Co., Ltd.), followed by stirring until uniform. The reaction vessel in an ice water bath was charged with a solution of 3.4 g of potassium hydroxide (available from Fujifilm Wako Pure Chemical Corporation, 60 mmol) in 10 mL of pure water, followed by stirring for 10 minutes. The reaction vessel was taken out of the ice water bath, and the contents were stirred for 12 hours at room temperature. The reaction solution was poured into a solution mixture of 30 mL of icy water and 60 mL of methylene chloride. The aqueous layer was extracted three times with methylene chloride. To the separated organic layer was added 8 g of magnesium sulfate, so that the organic layer was dried. Magnesium sulfate was removed from the treated solution by filtration. Volatile components were distilled off from the treated solution, whereby a tosylate of polyethylene glycol monomethyl ether was obtained.

(Synthesis Example 3) Synthesis of Compound 1-2

Compound 1-2 was obtained by reacting the tosylate of polyethylene glycol monomethyl ether synthesized in Synthesis Example 2 in place of triethylene glycol-2-bromoethyl methyl ether under the reaction conditions of Synthesis Example 1.

(Synthesis Example 4) Synthesis of Compound 1-3

A reaction vessel purged with nitrogen was charged with 600 mg of sodium hydroxide (available from Fujifilm Wako Pure Chemical Corporation, 15.3 mmol), 30 g of 1,3-bis(trifluoromethyl)benzene (available from Tokyo Chemical Industry Co., Ltd.), and 5.1 g of monoalcohol-terminated fluoropolyether (available from Uni-chem Co., Ltd., modified product of perfluoropolyether, molecular weight: 1500, 5.1 mmol), followed by stirring with heating at 70°C for three hours. The temperature inside the vessel was set to 65°C, and 2.8 g of triethylene glycol-2-bromoethyl methyl ether (available from Tokyo Chemical Industry Co., Ltd., 10.0 mmol) was dropped from a dropping funnel over 10 minutes, followed by stirring with heating for six hours. After returning to room temperature, 5 ml of 1 N hydrochloric acid was added to the reaction solution, followed by stirring for three hours. This solution was washed four times with pure water, and 2 g of magnesium sulfate was added to the separated organic layer, so that the organic layer was dried. Magnesium sulfate was removed from the treated solution by filtration. Volatile components were distilled off from the treated solution, followed by drying for three hours at 100°C, whereby Compound 1-3 was obtained.

(Synthesis Example 5) Synthesis of Compound 1-4

Compound 1-4 was obtained as in Synthesis Example 4, except that monoalcohol-terminated fluoropolyether was replaced with a modified product of perfluoropolyether (available from Uni-chem Co., Ltd., molecular weight: 2000).

(Synthesis Example 6) Synthesis of Compound 1-5

Compound 1-5 was obtained as in Synthesis Example 4, except that monoalcohol-terminated fluoropolyether was replaced with a modified product of perfluoropolyether (available from Uni-chem Co., Ltd., molecular weight: 3000).

(Synthesis Example 7) Synthesis of Compound 1-6

Compound 1-6 was obtained as in Synthesis Example 4, except that monoalcohol-terminated fluoropolyether was replaced with Demnum SA available from Daikin Industries, Ltd.

(Synthesis Example 8) Synthesis of Compound 1-7

Compound 1-7 was obtained as in Synthesis Example 4, except that monoalcohol-terminated fluoropolyether was replaced with Fluorolink ZMF-402 available from Solvay.

(Synthesis Example 9) Synthesis of ditosylate-terminated polyethylene glycol

A reaction vessel purged with nitrogen was charged with 4.0 g of polyethylene glycol 200 (available from Tokyo Chemical Industry Co., Ltd., average molecular weight 190 to 210, 20.0 mmol), 25 mL of tetrahydrofuran (available from Tokyo Chemical Industry Co., Ltd.), 9.4 g of p-toluenesulfonyl chloride (available from Tokyo Chemical Industry Co., Ltd., 50 mmol), followed by stirring until uniform. The reaction vessel in an ice water bath was charged with 6.7 g of potassium hydroxide (available from Fujifilm Wako Pure Chemical Corporation, 120 mmol), followed by stirring for 10 minutes. The reaction vessel was taken out of the ice water bath, and the contents were stirred for 12 hours at room temperature. The reaction solution was poured into a solution mixture of 30 mL of icy water and 60 mL of methylene chloride. The aqueous layer was extracted three times with methylene chloride. To the separated and collected organic layer was added 5 g of magnesium sulfate, so that the organic layer was dried. Magnesium sulfate was removed from the treated solution by filtration. Volatile components were distilled off from the treated solution, whereby the ditosylate-terminated polyethylene glycol of interest was obtained.

(Synthesis Example 10) Synthesis of Compound 1-8

A reaction vessel purged with nitrogen was charged with 600 mg of sodium hydroxide (available from Fujifilm Wako Pure Chemical Corporation, 15.3 mmol), 30 g of 1,3-bis(trifluoromethyl)benzene (available from Tokyo Chemical Industry Co., Ltd.), and 20.4 g of monoalcohol-terminated fluoropolyether (available from Solvay, Fluorolink ZMF-402, 5.1 mmol), followed by stirring with heating at 70°C for three hours. The temperature inside the vessel was set to 65°C, and a solution of 1.3 g (2.5 mmol) of ditosylate-terminated polyethylene glycol obtained in Synthesis Example 9 in 5 g of 1,3-bis(trifluoromethyl)benzene was dropped from a dropping funnel over 10 minutes, followed by stirring with heating for six hours. After returning to room temperature, 5 ml of 1 N hydrochloric acid was added to the reaction solution, followed by stirring for three hours. This solution was washed four times with pure water, and 2 g of magnesium sulfate was added to the separated organic layer, so that the organic layer was dried. Magnesium sulfate was removed from the treated solution by filtration. Volatile components were distilled off from the treated solution, followed by drying for three hours at 100°C, whereby Compound 1-8 was obtained.

(Synthesis Example 11) Synthesis of Compound 1-9

Compound 1-9 was obtained as in Synthesis Example 10, except that monoalcohol-terminated fluoropolyether was replaced with a modified product of perfluoropolyether (available from Uni-chem Co., Ltd., molecular weight: 1500).

<Experiment 1> Examples 1 to 11, Comparative Examples 1 to 6

(Preparation of composition (electrolyte solution) containing lithium salt)

A compound as Component 1 in Table 1 and lithium bis(trifluoromethane sulfonyl)imide (LiTFSI, available from Tokyo Chemical Industry Co., Ltd.), which is a lithium salt, were mixed and stirred at 45°C for 24 hours, so that a composition containing 5% by mass of a lithium salt was obtained. When a compound as Component 2 in Table 1 was contained, Component 1 and Component 2 were mixed at the volume ratio shown in Table 1, followed by addition of the lithium salt, so that a composition containing 5% by mass of a lithium salt was obtained.

(Non-flammability test)

The non-flammability (the nature of not being easily burned) of the composition was examined by the following method.

(Preparation of sample)

A strip of cellulose paper (width 15 mm, length 320 mm, thickness 0.04 mm) was thoroughly immersed in the composition produced in any of the examples and the comparative examples and then taken out to be used as a sample.

(Test method)

The sample was fixed onto a metal stand. A lighter flame was brought close to one end of the sample and held there for one second to check whether the sample ignited.

The evaluation criteria were as follows: a sample was marked as ∘ when the sample did not ignite (non-flammable) or when the sample ignited but the fire went out immediately (self-extinguishing); and a sample was marked as × when the sample ignited and continued to burn.

(Reduction resistance test)

A lithium metal piece was placed in the composition and allowed to stand for one week, after which discoloration of the surface of the lithium metal piece was visually observed. A lithium metal piece that exhibited no discoloration was evaluated as having good reduction resistance and marked as ∘. A lithium metal piece that exhibited discoloration was evaluated as having poor reduction resistance and marked as ×.

(Salt solubility test)

The prepared composition was visually observed and marked as follows: ∘ to indicate a case where the solution was homogeneous; Δ to indicate a case where the salt appeared to be dissolved but some of the salt remained undissolved; and × to indicate a case where the salt was not dissolved at all.

[Table 1]

| | Example | | | | | | | | | | | Comparative Example | | | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 1 | 2 | 3 | 4 | 5 | 6 |
| Component 1 | 1-1 | 1-2 | 1-3 | 1-4 | 1-5 | 1-6 | 1-7 | 1-8 | 1-9 | 1-1 | 1-1 | 2-1 | 2-2 | 2-3 | 2-4 | 2-5 | 2-6 |
| Component 2 | | | | | | | | | | 2-1 | 2-1 | | | | | | |
| Proportion of Component 1 % by volume | 100% | 100% | 100% | 100% | 100% | 100% | 100% | 100% | 100% | 99% | 90% | 100% | 100% | 100% | 100% | 100% | 100% |
| Non-flammability | ○ | ○ | ○ | ○ | ○ | ○ | ○ | ○ | ○ | ○ | ○ | × | × | × | ○ | ○ | ○ |
| Reduction resistance | ○ | ○ | ○ | ○ | ○ | ○ | ○ | ○ | ○ | ○ | ○ | × | × | × | ○ | × | × |
| Salt solubility | ○ | ○ | ○ | ○ | ○ | ○ | △ | △ | △ | ○ | ○ | ○ | ○ | ○ | × | ○ | × |

<Experiment 2> Examples 12 to 25, Comparative Examples 7 to 12

(Preparation of composition (electrolyte solution) containing lithium salt)

Solutions were prepared as in Experiment 1 using the combinations of a compound and a salt shown in Tables 2 to 4. The salts used are listed below.

> LiTFSI: lithium bis(trifluoromethanesulfonyl)imide (Tokyo Chemical Industry Co., Ltd.)
> LiFSI: lithium bis(fluorosulfonyl)imide (Tokyo Chemical Industry Co., Ltd.)
> $LiPF_6$: lithium hexafluorophosphate (Kanto Denka Kogyo Co., Ltd.)

(Ion conductivity measurement)

The ion conductivity was measured at 25°C using SevenCompact S230 available from Mettler Toledo. The measuring device was pre-calibrated using a standard solution with an ion conductivity of 12.88 mS/cm before use.

(Li ion transport number)

The Li ion transport number was determined by the following method (pulsed magnetic field gradient NMR measurement).
A pulsed magnetic field gradient NMR measurement was performed at 25°C with the target nuclide $^7$Li using JEOL JNM-ECA400WB. Each self-diffusion coefficient D was determined from the slope of an approximation line obtained by plotting the left side of the following formula on the vertical axis and k on the horizontal axis:

[Math. 2]

$$\ln\left[\frac{A(g)}{A(0)}\right] = -kD \qquad \left(k = \gamma^2 g^2 \delta^2 (\Delta - \delta/3)\right)$$

wherein A(0) is the peak intensity when no magnetic field gradient pulse is applied, A(g) is the peak intensity at each gradient magnetic field intensity g, $\delta$ is the magnetic field gradient pulse width, $\Delta$ is the diffusion time (100 ms) of the molecule being observed, $\gamma$ is the gyromagnetic ratio, and D is the diffusion coefficient.

(Production of coin-type lithium ion secondary battery)

(Production of positive electrode)

In an NMP solvent, 95% by mass of $Li(Ni_{0.6}Mn_{0.2}Co_{0.2})O_2$ as a positive electrode active material, 3% by mass of acetylene black as a conductive aid, and 2% by mass of polyvinylidene fluoride (PVdF) as a binder were mixed to form a slurry. The resulting slurry was uniformly applied to 20-$\mu$m-thick aluminum foil and dried (110°C, 30 minutes). The workpiece was compression-formed under a load using a press to produce a positive electrode sheet integrated with a current collector, which was then punched out to a predetermined size. The electrode mixture had a thickness of 57 $\mu$m and a density of 2.8 g/cc.

(Production of negative electrode)

To 98 parts by mass of a carbonaceous material (graphite) was added 1 part by mass of an aqueous dispersion of sodium carboxymethyl cellulose (concentration of sodium carboxymethyl cellulose: 1% by mass) and 1 part by mass of an aqueous dispersion of styrene-butadiene rubber (concentration of styrene-butadiene rubber: 50% by mass) respectively serving as a thickening agent and a binder. The components were mixed using a disperser to form slurry. The resulting slurry was applied to 10-$\mu$m-thick copper foil and dried. The workpiece was rolled using a press and punched out to a desired size.

<Production of coin cell>

The positive and negative electrodes above were faced to each other across a 20 $\mu$m-thick microporous polyethylene film (separator). The electrolyte solution used was one having a composition obtained in the preparation of a composition (electrolyte solution) containing a lithium salt. The workpiece was held in a vacuum state. The nonaqueous electrolyte solution was made to sufficiently permeate into the separator and the like. The workpiece was then sealed, pre-charged, and aged, whereby a coin-type lithium ion secondary battery was produced.

(Weight discharge capacity characteristic/high temperature cycle characteristic)

The lithium ion secondary battery produced above was subjected to constant current constant voltage charging (cut at 0.01 C) to 4.2 V at 80°C at a current corresponding to a flow of 0.05 C, followed by discharging to 3 V at a constant current corresponding to a flow of 0.05 C. This process was counted as one cycle. The initial discharge capacity was calculated from the discharge capacity at the third cycle. Then, the weight discharge capacity characteristic was determined from the following formula.

Weight discharge capacity characteristic (mAh/g)
= initial discharge capacity (mAh)/weight of active        - Calculation formula for weight discharge capacity characteristic
material in positive electrode mixture (g)

The weight discharge capacity characteristic was ranked as follows:

A: 165 mAh/g or more
B: 155 mAh/g or more and less than 165 mAh/g
C: 145 mAh/g or more and less than 155 mAh/g
D: Less than 145 mAh/g

Thereafter, the battery was subjected to 10 cycles of the process above, and the capacity retention rate was calculated by the following formula.

Capacity retention rate (%) = discharge capacity after 10 cycles
(mAh)/discharge capacity after 3 cycles (mAh) × 100        - Calculation formula for capacity retention rate

The capacity retention rate (high temperature cycle characteristic) was ranked as follows.

A: 95% or higher
B: 90% or higher and lower than 95%
C: 85% or higher and lower than 90%
D: Lower than 85%

[Table 2]

| | | Example | | | | | | | | |
|---|---|---|---|---|---|---|---|---|---|---|
| | | 12 | 13 | 14 | 15 | 16 | 17 | 18 | 19 | 20 |
| Compound | | 1-1 | 1-2 | 1-3 | 1-4 | 1-5 | 1-6 | 1-7 | 1-8 | 1-9 |
| Type of salt | | LiTFSI | LiTFSI | LiTFSI | LiTFSI | LiTFSI | LiTFSI | LiTFSI | LiTFSI | LiTFSI |
| Salt concentration | (% by mass) | 5 | 5 | 5 | 5 | 5 | 5 | 5 | 5 | 5 |
| Ion conductivity | (S/cm) | 3.0.E-04 | 1.9.E-04 | 4.4E-05 | 9.1.E-06 | 5.0.E-06 | 9.4.E-06 | 6.5.E-07 | 21.E-07 | 2.3.E-07 |
| Li ion transport number | | 0.31 | 0.32 | 0.30 | 0.30 | 0.34 | 0.32 | 0.39 | 0.35 | 0.33 |
| Weight discharge capacity characteristic | | A | A | B | B | C | A | D | D | D |
| High temperature cycle characteristic | | B | B | B | B | B | B | A | A | A |

In Table 2, the values including "E" represent exponents. For example, ".E-04" means "$\times 10^{-4}$". The same applies to Tables 3 and 4 below.

[Table 3]

|  |  | Example | | | | |
|---|---|---|---|---|---|---|
|  |  | 21 | 22 | 23 | 24 | 25 |
| Compound |  | 1-1 | 1-1 | 1-1 | 1-1 | 1-1 |
| Type of salt |  | LiTFSI | LiTFSI | LiTFSI | LiFSI | LiPF6 |
| Salt concentration | (% by mass) | 1 | 10 | 30 | 5 | 5 |
| Ion conductivity | (S/cm) | 8.2.E-05 | 4.9.E-05 | 9.3.E-05 | 5.2.E-05 | 7.7.E-05 |
| Li ion transport number |  | 0.40 | 0.30 | 0.42 | 0.30 | 0.25 |
| Weight discharge capacity characteristic |  | B | B | C | B | C |
| High temperature cycle characteristic |  | C | B | B | B | B |

[Table 4]

|  |  | Comparative Example | | | | | |
|---|---|---|---|---|---|---|---|
|  |  | 7 | 8 | 9 | 10 | 11 | 12 |
| Compound |  | 2-1 | 2-2 | 2-3 | 2-4 | 2-5 | 2-6 |
| Type of salt |  | LiTFSI | LiTFSI | LiTFSI | LiTFSI | LiTFSI | LiTFSI |
| Salt concentration | (% by mass) | 5 | 5 | 5 | 5 | 5 | 5 |
| Ion conductivity | (S/cm) | 6.4.E-05 | 8.3.E-05 | 7.2.E-05 | 8.0.E-08 | 7.2.E-06 | 9.1.E-08 |
| Li ion transport number |  | 0.31 | 0.37 | 0.35 | 0.11 | 0.23 | 0.16 |
| Weight discharge capacity characteristic |  | C | D | D | D | D | D |
| High temperature cycle characteristic |  | D | D | D | D | D | D |

<Preparation of polymer electrolyte membrane>

In 10 mL of dimethylformamide, 10 g of polyethylene oxide (available from Fujifilm Wako Pure Chemical Corporation, molecular weight 1000000), 4 g of Compound 1-1, and 0.2 g of LiTFSI: lithium bis(trifluoromethanesulfonyl)imide (available from Tokyo Chemical Industry Co., Ltd.) as an alkali metal salt were dissolved. The resulting solution was cast using an applicator and adjusted to have a thickness of about 60 $\mu$m after drying. The cast polymer electrolyte solution was dried under reduced pressure at 100°C for 24 hours to produce a polymer electrolyte membrane.

<Production of coin cell using polymer electrolyte membrane>

(Example 26)

The positive electrode used in Example 12, the polymer electrolyte produced above, and the negative electrode used in Example 12 were laminated in this order. The laminate was rolled with a roll press to enhance the adhesion. Thereafter, the workpiece was sealed, pre-charged, and then aged, whereby a coin-type lithium ion secondary battery was produced.

(Comparative Example 13)

A coin-type lithium ion secondary battery was produced as in Example 26, except that a polymer electrolyte membrane was produced using Compound 2-2 in place of Compound 1-1.

(Weight discharge capacity characteristic/high temperature cycle characteristic)

The lithium ion secondary battery produced above was subjected to constant current constant voltage charging (cut at 0.01 C) to 4.2 V at 80°C at a current corresponding to a flow of 0.05 C, followed by discharging to 3 V at a constant current corresponding to a flow of 0.05 C. This process was counted as one cycle. The initial discharge capacity was calculated from the discharge capacity at the third cycle. Then, the weight discharge capacity characteristic was determined from the following formula.

Weight discharge capacity characteristic (mAh/g) = --> initial discharge capacity (mAh)/weight of active material in positive electrode mixture (g)      - Calculation formula for weight discharge capacity characteristic

The weight discharge capacity characteristic was ranked as follows:

A: 100 mAh/g or more
B: 90 mAh/g or more and less than 100 mAh/g
C: 80 mAh/g or more and less than 90 mAh/g
D: Less than 80 mAh/g

Thereafter, the battery was subjected to 10 cycles of the process above, and the capacity retention rate was calculated by the following formula.

Capacity retention rate (%) = discharge capacity after 10 cycles (mAh)/discharge capacity after 3 cycles (mAh) $\times$ 100      - Calculation formula for capacity retention rate

The capacity retention rate (high temperature cycle characteristic) was ranked as follows.

A: 95% or higher
B: 90% or higher and lower than 95%
C: 85% or higher and lower than 90%
D: Lower than 85%

[Table 5]

| | Example | Comparative Example |
|---|---|---|
| | 26 | 13 |
| Compound | 1-1 | 2-2 |
| Type of salt | LiTFSI | LiTFSI |
| Salt concentration (% by mass) | 5 | 5 |
| Weight discharge capacity characteristic | B | D |
| High temperature cycle characteristic | B | D |

**Claims**

1. A composition comprising:

   a salt; and
   at least one fluoropolyether represented by any of the following formulas (1) to (3):

   (1)      $R^1$-O-Ra$^1$-Rb$^1$-O-Ra$^1$-R$^1$;

   (2)      $R^2$-Rb$^2$-O-Ra$^2$-Rb$^2$-R$^2$;

and

(3)     $R^3$-$Rb^3$-O-$Ra^3$-$R^3$,

wherein $Ra^1$ to $Ra^3$ are each independently a polyoxyalkylene group containing 4 to 50 fluorine-free oxyalkylene units;

the oxyalkylene units in $Ra^1$ to $Ra^3$ are each independently $-CH_2CH_2O-$ or $-CH_2CH(J)O-$;

each J is independently an alkyl group or an aryl group;

$Rb^1$ to $Rb^3$ are each independently a fluoropolyether group represented by the following formula (4);

$R^1$ and $R^3$ are each independently a fluorine atom, a C1-C3 alkyl group, an aryl group, a carboxylic acid group, or a C1-C3 fluoroalkyl group; and

each $R^2$ is independently a hydrogen atom, a hydroxy group, a fluorine atom, a C1-C3 alkyl group, an aryl group, a carboxylic acid group, or a C1-C3 fluoroalkyl group:

(4)     $-Rf^1$-Rf-O-$Rf^2$-

wherein $Rf^1$ and $Rf^2$ are each independently a C1-C16 alkylene group optionally substituted with a fluorine atom, and

Rf is a divalent fluoropolyether group.

2. The composition according to claim 1,
wherein the $Ra^1$ to $Ra^3$ are each independently a polyoxyalkylene group represented by the following formula (Ra-I):

(Ra-I):     $-(CH_2CH_2O)_r(CH_2CH(CH_3)O)_s(CH_2CH(CH_2CH_3)O)_t(CH_2CH(Ph)O)_u-$

wherein r, s, t, and u are each independently an integer of 0 or 1 or greater, and r + s + t + u is 4 to 50.

3. The composition according to claim 1 or 2,
wherein the $Ra^1$ to $Ra^3$ each have a number average molecular weight of 40 to 4000.

4. The composition according to any one of claims 1 to 3,

wherein each Rf is independently a fluoropolyether group represented by the following formula (Rf-I):

Formula (Rf-I):     $-(OC_6F_{12})a-(OC_5F_{10})b-(OC_4F_8)c-(OC_3Rc_6)d-(OC_2F_4)e-(OCF_2)f-$

wherein Rcs are each independently a hydrogen atom, a fluorine atom, or a chlorine atom;

a, b, c, d, e, and f are each independently an integer of 0 to 200;

a sum of a, b, c, d, e, and f is 1 or greater;

repeating units with a, b, c, d, e, and f are present in an arbitrary order; and

at least one of a, b, c, e, and f is 1 or greater when all Rcs are hydrogen atoms or chlorine atoms.

5. The composition according to any one of claims 1 to 4,

wherein each Rf is independently a group represented by the following formula (Rf-I-I) or the following formula (Rf-I-II):

Formula (Rf-I-I):     $-(OC_3F_6)_d-(OC_2F_4)_e-$

wherein d is an integer of 1 to 200 and e is 0 or 1,

Formula (Rf-I-II):     $-(OC_4F_8)_c-(OC_3F_6)_d-(OC_2F_4)_e-(OCF_2)f-$

wherein c and d are each independently an integer of 0 to 30;

e and f are each independently an integer of 1 to 200;

a sum of c, d, e, and f is 2 or greater; and

repeating units with c, d, e, and f are present in an arbitrary order.

**6.** The composition according to any one of claims 1 to 5,
wherein the $R^1$ to $R^3$ are each independently a methyl group, an ethyl group, a trifluoromethyl group, or a pentafluoroethyl group.

**7.** The composition according to any one of claims 1 to 6,
wherein the salt includes a lithium salt.

**8.** The composition according to any one of claims 1 to 7,
wherein an amount of the salt is 0.1 to 30% by mass.

**9.** The composition according to any one of claims 1 to 8,
wherein the composition is liquid at a temperature within a range of 25°C to 80°C.

**10.** The composition according to any one of claims 1 to 9,

wherein an amount of a polyalkylene oxide represented by the following formula (5) is less than 20% by mass:

$$(5) \qquad R^{1B}\text{-}(O_{CHR}{}^{1A}(CH_2)_jCHR^{2A})n\text{-}OR^{2B}$$

wherein $R^{1A}$ and $R^{2A}$ are each independently a hydrogen atom or a C1-C5 alkyl group;
j is an integer of 0 or 1 or 2,
$R^{1B}$ and $R^{2B}$ are each independently a hydrogen atom or a C1-C3 alkyl group; and
n is an integer of 5 to 1000.

**11.** An electrolyte solution comprising the composition according to any one of claims 1 to 10.

**12.** The electrolyte solution according to claim 11,
wherein the electrolyte solution has an ion conductivity of $1.0 \times 10^{-7}$ to $1.0 \times 10^{-3}$ S/cm.

**13.** The electrolyte solution according to claim 11 or 12,
wherein the electrolyte solution has a Li ion transport number of 0.2 to 0.5.

**14.** A polymer electrolyte comprising the electrolyte solution according to any one of claims 11 to 13.

**15.** An electrochemical device comprising the electrolyte solution according to any one of claims 11 to 13 or the polymer electrolyte according to claim 14.

**16.** A fluoropolyether represented by the following formula (2A):

$$(2A) \qquad R^2\text{-}Rb^2\text{-}O\text{-}Ra^2\text{-}Rb^2\text{-}R^2$$

wherein $Ra^2$ is a polyoxyalkylene group containing 4 to 50 fluorine-free oxyalkylene units;

the oxyalkylene units in $Ra^2$ are each independently - $CH_2CH_2O$- or -$CH_2CH(J)O$-;
each J is independently an alkyl group or an aryl group;
each $Rb^2$ is independently a fluoropolyether group represented by the following formula (4A); and
each $R^2$ is independently a hydrogen atom, a hydroxy group, a fluorine atom, a C1-C3 alkyl group, an aryl group, a carboxylic acid group, or a C1-C3 fluoroalkyl group: (4A) -$Rf^1$-Rf-O-$Rf^2$- wherein $Rf^1$ and $Rf^2$ are each independently a C1-C16 alkylene group optionally substituted with a fluorine atom, and Rf is a divalent fluoropolyether group.

**17.** The fluoropolyether according to claim 16,

wherein the $Ra^2$ is a polyoxyalkylene group represented by the following formula (Ra-I),
each Rf is independently a group represented by the following formula (Rf-I-I) or the following formula (Rf-I-II):

$$(Ra\text{-}I): \qquad \text{-}(CH_2CH_2O)_r\text{-}(CH_2CH(CH_3)O)_s\text{-}(CH_2CH(CH_2CH_3)O)_t\text{-}(CH_2CH(Ph)O)_u\text{-}$$

wherein r, s, t, and u are each independently an integer of 0 or 1 or greater, and r + s + t + u is 4 to 50;

Formula (Rf-I-I): $-(OC_3F_6)_d-(OC_2F_4)_e-$

wherein d is an integer of 1 to 200 and e is 0 or 1;

Formula (Rf-I-II): $-(OC_4F_8)_c-(OC_3F_6)_d-(OC_2F_4)_e-(OCF_2)_f-$

wherein c and d are each independently an integer of 0 to 30,
e and f are each independently an integer of 1 to 200,
a sum of c, d, e, and f is 2 or greater, and
repeating units with c, d, e, and f are present in an arbitrary order.

## INTERNATIONAL SEARCH REPORT

| International application No. |
|---|
| **PCT/JP2024/031040** |

### A. CLASSIFICATION OF SUBJECT MATTER

*H01M 10/0569*(2010.01)i; *C08G 65/48*(2006.01)i; *H01M 10/0568*(2010.01)i
FI: H01M10/0569; H01M10/0568; C08G65/48

According to International Patent Classification (IPC) or to both national classification and IPC

### B. FIELDS SEARCHED

Minimum documentation searched (classification system followed by classification symbols)

H01M10/0569; C08G65/48; H01M10/0568

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | JP 2019-523529 A (SOLVAY SPECIALTY POLYMERS ITALY S.P.A.) 22 August 2019 (2019-08-22) examples | 1-5, 7-13, 15 |
| A | | 6, 14, 16-17 |
| A | WO 2019/113526 A1 (ENEVATE CORPORATION) 13 June 2019 (2019-06-13) | 1-17 |
| A | JP 2018-533156 A (CALIFORNIA INSTITUTE OF TECHNOLOGY) 08 November 2018 (2018-11-08) | 1-17 |

☐ Further documents are listed in the continuation of Box C.　　☑ See patent family annex.

| | |
|---|---|
| \*　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "D"　document cited by the applicant in the international application | "X"　document of particular relevance; the claimed invention cannot be considered novel or cannot be considered to involve an inventive step when the document is taken alone |
| "E"　earlier application or patent but published on or after the international filing date | |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search | Date of mailing of the international search report |
|---|---|
| **11 November 2024** | **26 November 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/031040**

| Patent document cited in search report | | | Publication date (day/month/year) | Patent family member(s) | | | Publication date (day/month/year) |
|---|---|---|---|---|---|---|---|
| JP | 2019-523529 | A | 22 August 2019 | US | 2019/0165418 | A1 | |
| | | | | examples | | | |
| | | | | WO | 2018/019804 | A1 | |
| | | | | EP | 3488483 | A1 | |
| | | | | CN | 109478681 | A | |
| WO | 2019/113526 | A1 | 13 June 2019 | US | 2019/0181500 | A1 | |
| JP | 2018-533156 | A | 08 November 2018 | US | 2017/0057908 | A1 | |
| | | | | WO | 2017/069834 | A2 | |
| | | | | EP | 3332442 | A2 | |
| | | | | CN | 108028428 | A | |
| | | | | KR | 10-2021-0096660 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019523529 T
- JP H08222270 A
- JP 2002100405 A
- JP H04506726 T
- JP H08507407 T
- JP H10294131 T
- JP H1135765 A
- JP H1186630 A